# EUROPÄISCHE PATENTSCHRIFT

(11) **EP 1 500 493 B1**
(45) Veröffentlichungstag und Bekanntmachung des Hinweises auf die Patenterteilung: **16.09.2009**
(21) Anmeldenummer: 04103490.1
(22) Anmeldetag: 21.07.2004
(51) Int. Cl.: B32B 11/04, E04D 5/10

(54) **Farbig-kaschierte Bitumenbahnen**
Colour-laminated bitumen web
Lé bitumé, coloré et soudable

(30) Priorität: 22.07.2003 DE 10333473
(43) Veröffentlichungstag der Anmeldung: 26.01.2005
(73) Patentinhaber: Lucobit AG, 50389 Wesseling (DE)
(72) Erfinder: Deloux, Laurent, 69115 Heidelberg (DE)
(74) Vertreter: Michalski, Stefan

(56) Entgegenhaltungen:
- EP-A- 0 317 337
- EP-A- 0 704 297
- EP-A- 0 764 748
- DE-A- 2 425 119
- DE-A- 19 910 420
- US-A- 4 442 148

## Beschreibung

Die vorliegende Erfindung betrifft farbige, verschweißbare Mehrschicht-Abdichtbahnen, sowie geeignete Verwendungen, beispielsweise als witterungsbeständige farbige Mehrschicht-Abdichtung von Dächern und anderen Gebäudeteilen.

Zum Schutz exponierter Gebäudeflächen gegen Witterungseinflüsse, insbesondere zum Schutz gegen Wasser, sind Bahnen aus Bitumen, Polymerbitumen oder Kunststoff im Stand der Technik bekannt. Die direkte Verwendung von Bitumenbahnen ist bedingt durch die dunkle bis schwarze Farbe des Bitumens nachteilig, da das Bitumen durch Sonneneinstrahlung stark erhitzt wird. Außerdem genügt die dunkle bis schwarze Farbe des Bitumens nicht immer den ästhetischen Ansprüchen. Es wurden deshalb umfangreiche Bemühungen unternommen farbige Bitumenbahnen zur Verfügung zu stellen.

Ein weiterer Nachteil ist die geringe Witterungsbeständigkeit von Bitumenbahnen, die beispielsweise mit Elastomer (SBS) modifiziert sind, da dieses oxidiert wird.

So ist aus der Schrift DE 201 11 595 U1 eine farbige Gestaltung von Bitumenbahnen mittels farbiger Besplittung der Oberschicht bekannt. Der verwendete Schiefersplitt haftet jedoch nicht ausreichend in der Bitumenschicht, so dass es witterungsbedingt zu einer Ablösung des Schiefersplitts kommt. Folglich ist eine dauerhaft haftende Beschichtung der Bitumenbahn nicht gewährleistet. Hierdurch steigt insbesondere eine durch Funkenflug oder Flugfeuer verursachte Brandgefahr. Außerdem ist der Schiefersplitt nicht verschweißbar, so dass besplittete Bitumenbahnen nicht nahtlos dicht verschweißbar sind. Ferner ist nachteilig, dass die Besplittung nicht beliebig farbig gestaltet werden kann, da die Farbpigmente des eingefärbten Schiefersplitts durch in der Bitumenbahn enthaltene Ölanteile des Bitumens angegriffen werden und deshalb über einen verlängerten Zeitraum nicht farbbeständig sind.

Hinzuzufügen ist noch, dass Bitumenbahnen neben Witterungseinflüssen auch potentiellen Gefahrenquellen ausgesetzt sind, beispielsweise Funkenflug oder Flugfeuer. Die im Stand der Technik bekannten polymerbeschichteten Bitumenbahnen haben insgesamt den Nachteil, dass diese nicht oder nur unzureichend gegen Funkenflug oder Flugfeuer gesichert sind.

Aus der Patentschrift DE 44 03 101 sind farbige Kunststoffbeschichtungen von Bitumenbahnen bekannt, die auf die Oberfläche der Bitumenbahnen direkt aufkaschiert werden. Nachteilig ist hierbei, dass die im Bitumen enthaltenen Öle an die Oberfläche der Bahn migrieren und ölige Flecken in der Kunststoffbeschichtung verursachen.

So enthält Bitumen bekanntermaßen Schwefelverbindungen, welche zu schwefelhaltigen Säuren oxidieren können und mit UV-Stabilisatoren, Pigmenten und/oder Additiven, die in Polyolefinbeschichtungen von Bitumenbahnen, insbesondere in Polyethylen, enthalten sind, insbesondere mit als UV-Stabilisatoren verwendeten HALS-Stabilisatoren (hindered amine light stabilizer, sterisch gehinderte Amine) in den Polyolefin-Schichten reagieren. Hierdurch werden UV-Stabilisatoren und somit der UV-Schutz der Bitumenbahnen zerstört. Ferner können die HALS-Stabilisatoren durch die im Bitumen enthaltenen Öle extrahiert werden.

Zur Vermeidung von öligen Flecken in der Kunststoffbeschichtung werden als Ölsperrschichten Metalllagen zum Schutz der darüber liegenden polymeren Schichten vorgeschlagen. Nachteilig bei einer Verwendung metallischer Sperrschichten ist der Verlust der Flexibilität der Bitumenbahnen. Weiterhin unterscheiden sich die Metallschicht und darüber liegende polymere Schichten in Ihrem Ausdehnungskoeffizienten, was beim Verschweißen zu Rissen und/oder Ablösungen der verbundenen Schichten führen kann. Schließlich lassen sich Metallschichten nicht gemeinsam mit polymeren Schichten und Bitumen zu einer Mehrschichtbahn coextrudieren. Nachteilig ist ferner, dass sich Metallschichten nicht oder nur sehr schlecht verschweißen lassen.

Die Schrift EP 0 764 748 A1 offenbart eine rutschfeste Dachunterlage umfassend eine selbstklebende Membran-Klebstoffschicht, die an einer Trägerbahn befestigt ist, die wenigstens zwei verschiedene Kunststofffolien aufweist, wobei die Trägerbahn gewellt ist und in Längsrichtung Rippen aufweist, um Rutschfestigkeit zur Verfügung zu stellen wenn die Unterlage auf einem schrägen Dach angebracht ist.

Weiterhin offenbart die Schrift EP 0 704 297 A1 ein verbessertes vorgeformtes flexibles bahnförmiges Laminat, das zum Wasserabdichten von Gebäudeflächen geeignet ist, umfassend eine elastische, wasserdichte und wasserabdichtende, bituminöse Membran und, im Wesentlichen zusammenhängend damit, eine nicht ablösbar verklebte Trägerbahn-Anordnung, die durch Koextrudieren einer ersten und zweiten polymeren Schicht geformt wurde, wobei deren äußere Schicht ein Additiv zur Lichreflektion enthält, und wenigstens eine koextrudierte ölbeständige und ölundurchlässige Polymerfolie.

Der vorliegenden Erfindung lag die Aufgabe zugrunde, die vorgenannten Nachteile des Standes der Technik zu überwinden und eine farbige verschweißbare Mehrschicht-Abdichtbahn zur Verfügung zu stellen, die sowohl eine verbesserte Verschweißbarkeit aufweist, als auch farb- und witterungsbeständig, insbesondere gegen Farbveränderungen durch Bitumenöl ist.

Eine weitere Aufgabe der vorliegenden Erfindung ist es, eine farbige verschweißbare Mehrschicht-Abdichtbahn mit einem Schutz vor Funkenflug und Flugfeuer zur Verfügung zu stellen.

Diese Aufgabe wird durch eine farbige verschweißbare Mehrschicht-Abdichtbahn gelöst, wobei die farbige verschweißbare Mehrschicht-Abdichtbahn folgende Schichten umfasst:
- wenigstens eine farb- und witterungsbeständige, verschweißbare Farbpolymerschicht;
- wenigstens eine nichtmetallische Sperrschicht;
- wenigstens eine Bitumenschicht,
- gegebenenfalls wenigstens eine Flammschutzschicht,
- gegebenenfalls wenigstens eine Schutzschicht,
- gegebenenfalls wenigstens eine Haftvermittlerschicht,
- gegebenenfalls wenigstens eine Trägerschicht, worin
die Schichten so angeordnet sind, dass die Mehrschicht-Abdichtbahn als oberste Lage wenigstens eine farb- und witterungsbeständige, verschweißbare Farbpolymerschicht aufweist, und die nichtmetallische Sperrschicht zwischen dieser Polymerschicht und der Bitumenschicht angeordnet ist, wobei die farbige verschweißbare Mehrschicht-Abdichtbahn ein E-Modul im Bereich von ≥ 20 MPa bis ≤ 200 MPa aufweist.

Vorteilhafte Weiterbildungen der Erfindung sind in den abhängigen Ansprüchen angegeben.

Weiterhin wird die Aufgabe der Erfindung auch durch ein Verfahren zur Herstellung der erfindungsgemäßen Mehrschicht-Abdichtbahn gelöst.

Vorteilhaft ist, dass die erfindungsgemäßen farbigen Mehrschicht-Abdichtbahnen verschweißbar sind. In einer bevorzugten Ausführungsform sind sämtliche Schichten der Mehrschicht-Abdichtbahn verschweißbar, so dass man eine dauerhaft wasserdichte und/oder wasserdampfdichte Verbindung sämtlicher Schichten der Mehrschicht-Abdichtbahn erzeugen kann.

Insbesondere lässt sich eine Flammschutzschicht aufweisende Mehrschicht-Abdichtbahn mit einer angrenzenden bzw. überlappenden erfindungsgemäßen Mehrschicht-Abdichtbahn mit Flammschutzschicht in einem Arbeitsgang verschweißen.

Verschweißbar im Sinne dieser Erfindung bedeutet, dass die der Umwelt ausgesetzten farb- und witterungsbeständigen Farbpolymerschichten und/oder Mehrschicht-Abdichtbahnen miteinander bei Schweißtemperaturen von bis zu 700°C, vorzugsweise im Bereich von 500°C bis 600°C, gegebenenfalls von bis zu 400°C, flüssigkeitsdicht verschweißbar sind.

Die Farbpolymerschicht kann weiterhin, um eine gute Verschweißbarkeit zu gewährleisten, eine Schichtdicke im Bereich von ≥ 50 µm bis ≤ 2000 µm, bevorzugt im Bereich von ≥ 70 µm bis ≤ 1700 µm, weiterhin bevorzugt im Bereich von ≥ 100 µm bis ≤ 1400 µm, besonders bevorzugt im Bereich von ≥ 150 µm bis ≤ 1000 µm, aufweisen. Bevorzugt ist, dass die Farbpolymerschichten eine Schichtdicke im Bereich von ≥ 50 µm bis ≤ 500 µm, ganz besonders bevorzugt im Bereich von ≥ 250 µm bis ≤ 500 µm aufweisen. Bevorzugt ist ferner dass die Farbpolymerschichten eine Schichtdicke im Bereich von ≥ 300 µm bis ≤ 1500 µm, insbesondere bevorzugt im Bereich von ≥ 800 µm bis ≤ 1300 µm, aufweisen. Es können aber auch Schichtdicken im Bereich von ≥ 400 µm, ≥ 500 µm oder ≥ 600 µm bis ≤ 1600 µm verwendet werden. Die Schichtdicke liegt bevorzugt im Bereich von 500 µm. Eine Farbpolymerschicht mit bis zu 1800 µm oder bis zu 2000 µm ist ebenfalls noch verschweißbar. Es hat sich gezeigt, dass solche Schichtdicken eine flüssigkeitsdichte Verbindung von erfindungsgemäßen Mehrschicht-Abdichtbahnen erlauben, ohne dass es zu einer Farbveränderung der der Umwelt ausgesetzten Farbpolymerschicht bedingt durch das Verschweißen kommt.

Wenn die Schichtdicke der farb- und witterungsbeständigen Farbpolymerschicht zu dünn gewählt wird, besteht die Gefahr, dass beim flüssigkeitsdichten Verschweißen der Mehrschicht-Abdichtbahnen die äußere Farbpolymerschicht zerstört wird. Bei einer zu dicken Schichtdicke der farb- und witterungsbeständigen Farbpolymerschicht besteht die Gefahr, dass man mehr Zeit zum flüssigkeitsdichten Verschweißen benötigt und dadurch die Hitzebelastung zu groß wird, so dass die äußere Farbpolymerschicht zerstört werden kann und/oder es zu einer Farbveränderung kommt. Ferner wird bei zu hohen Schichtdicken der Materialaufwand zu groß.

Die Farbe an der der Umwelt ausgesetzten Oberfläche der erfindungsgemäßen farbigen, verschweißbaren Mehrschicht-Abdichtbahn wird bedingt durch das Verschweißen, unter den vorgenannten Schweißbedingungen, nicht oder praktisch kaum sichtbar verändert. Die der Umwelt ausgesetzte farb- und witterungsbeständige, verschweißbare Farbpolymerschichtoberfläche ist somit unter Schweißbedingungen farbstabil.

Es ist bevorzugt, wenn die farb- und witterungsbeständige Farbpolymerschicht eine Dichte im Bereich von ≥ 0,880 g/cm³ bis ≤ 1,500 g/cm³, bevorzugt im Bereich von ≥ 0,900 g/cm³ bis ≤ 0,950 g/cm³, weiterhin bevorzugt im Bereich von ≥ 0,910 g/cm³ bis ≤ 0,940 g/cm³, und besonders bevorzugt im Bereich von ≥ 0,920 g/cm³ bis ≤ 0,930 g/cm³, aufweist. Hierdurch kann eine Fleckenbildung der äußeren Oberfläche der farb- und witterungsbeständigen Farbpolymerschicht durch gegebenenfalls migrierende Bitumenölanteile verhindert werden. Es ist bevorzugt, wenn eine auf Polyolefinen basierende Farbpolymerschicht, welche Flammschutzmittel umfasst, eine Dichte im Bereich von ≥ 1,000 g/cm³ bis ≤ 1,500 g/cm³, bevorzugt im Bereich von ≥ 1,100 g/cm³ bis ≤ 1,400 g/cm³ aufweist. Besonders bevorzugt kann eine auf Polyethylen, Polypropylen und/oder Polyolefin basierende Farbpolymerschicht, welche Flammschutzmittel umfasst, eine Dichte im Bereich von ≥ 1,100 g/cm³ bis ≤ 1,500 g/cm³ aufweisen. Eine Farbpolymerschicht basierend auf Polyolefinen ohne Flammschutzmittel kann auch eine Dichte im Bereich von ≥ 0,880 g/cm³ bis ≤ 1,000 g/cm³ aufweisen. Bevorzugt kann eine auf Polyethylen, Polypropylen und/oder Polyolefin basierende Farbpolymerschicht, welche keine Flammschutzmittel umfasst, eine Dichte im Bereich von ≥ 0,880 g/cm³ bis ≤ 1,000 g/cm³ aufweisen. Weiterhin kann eine auf Polyvinylchloriden (PVC) basierende Farbpolymerschicht, welche keine Flammschutzmittel umfasst, vorzugsweise eine Dichte im Bereich von ≥ 1,150 g/cm³ bis ≤ 1,500 g/cm³, bevorzugt im Bereich von ≥ 1,150 g/cm³ bis ≤ 1,350 g/cm³ aufweisen.

Es hat sich außerdem gezeigt, dass sich die erfindungsgemäße Mehrschichtabdichtbahn am Einsatzort besser verarbeiten lässt, wenn diese eine hohe Flexibilität aufweist. Außerdem sind derartige erfindungsgemäße flexible Mehrschicht-Abdichtbahnen besser gegen mechanische Beschädigungen geschützt. Insbesondere Dehn- und Spannungskräfte können von der verschweißten Mehrschichtabdichtbahn ausgeglichen werden ohne dass es zu einer Rissbildung und/oder Lösen einzelner Schichten der Mehrschichtabdichtbahn kommt. Insbesondere durch entstehende Risse besteht die Gefahr, dass auf der äußeren Oberfläche der Farbpolymerschicht Flecken durch migrierende Bitumenöle entstehen und/oder in der Farbpolymerschicht gegebenenfalls enthaltende UV-Stabilisatoren durch migrierende Bitumenöle zerstört werden.

Die farbige verschweißbare Mehrschicht-Abdichtbahn ist bevorzugt rollbar und/oder biegbar ausgebildet. Die erfindungsgemäße farbige, verschweißbare Mehrschicht-Abdichtbahn ist besonders bevorzugt rollbar und weist in vorteilhafter Weise eine geringe Steifigkeit auf.

Der E-Modul der erfindungsgemäßen Mehrschicht-Abdichtbahn liegt vorzugsweise im Bereich von ≥ 50 MPa bis ≤ 200 MPa, besonders bevorzugt im Bereich von ≥ 70 MPa bis ≤ 100 MPa. Der E-Modul, Elastizitätsmodul, ist ein Maß für die Steifigkeit und wird nach ISO 527-2 im Zugversuch gemessen. Der E-Modul der Mehrschicht-Abdichtbahn ermöglicht eine hohe Formbarkeit der Abdichtbahn.

Weiterhin weist die farbige verschweißbare Mehrschicht-Abdichtbahn vorzugsweise eine Schälfestigkeit zwischen der Farbpolymerschicht und der Bitumenschicht im Bereich von ≥ 50 N/5 cm bis ≤ 1000 N/5 cm, bevorzugt im Bereich von ≥ 200 N/5 cm bis ≤ 800 N/5 cm und besonders bevorzugt im Bereich von ≥ 300 N/5 cm bis ≤ 500 N/5 cm auf. Die Schälfestigkeit zwischen der Farbpolymerschicht und der Bitumenschicht wird nach DIN 53 357 gemessen.

Die farbige verschweißbare Mehrschicht-Abdichtbahn weist vorzugsweise eine Gesamtdicke der mehrschichtigen Anordnung im Bereich von 1,0 mm bis 5 mm, bevorzugt im Bereich von 1,75 mm bis 4 mm und besonders bevorzugt im Bereich von 2,6 mm bis 3,6 mm auf. Ganz besonders bevorzugt weist die farbige verschweißbare Mehrschicht-Abdichtbahn eine Gesamtdicke der mehrschichtigen Anordnung im Bereich von 3 mm auf.

Weiterhin weist die erfindungsgemäße Mehrschicht-Abdichtbahn bevorzugt keine durch Bitumen verursachte Farbveränderung an der Oberfläche auf. Bevorzugt weist die erfindungsgemäße Mehrschicht-Abdichtbahn nach einem Tag, vorzugsweise einer Woche, besonders bevorzugt nach einem Monat und weiter bevorzugt nach einem Jahr, bei einer Temperatur von -20°C bis 80 °C keine durch Bitumen verursachte Farbveränderung an der Oberfläche auf.

Farbveränderungen einer erfindungsgemäßen Mehrschicht-Abdichtbahn können beispielsweise durch einen sogenannten "oven test" ermittelt werden. Hierzu wird eine erfindungsgemäße Mehrschicht-Abdichtbahn in einem Umluftofen bei 80°C gelagert und die Oberfläche regelmäßig, beispielsweise einmal pro Woche, beobachtet. Eine Mehrschicht-Abdichtbahn ohne Sperrschicht weist abhängig von der Dicke der Mehrschicht-Abdichtbahn innerhalb von Wochen oder Monaten Verfärbungen an der Oberfläche auf. Bei einer erfindungsgemäßen Mehrschicht-Abdichtbahn umfassend eine Sperrschicht wird vorzugsweise nach einem Jahr Lagerung bei 80°C keine Verfärbung der Oberfläche beobachtet.

Ein weiterer großer Vorteil der erfindungsgemäßen Mehrschicht-Abdichtbahn wird durch die verbesserte Stabilität gegenüber Umwelteinflüssen verwirklicht. Übliche Abdichtbahnen zeigen häufig bereits nach kurzer Zeit Materialverschleiß oder Schäden durch Witterungseinflüsse. So müssen beispielsweise lackbeschichtete Abdichtbahnen aufgrund von Brüchen oder Rissen im Lack regelmäßig, zumeist jährlich, erneuert werden, während Polyethylenoberflächen durch Witterungseinflüsse sogar abgetragen werden können.

In bevorzugten Ausführungsformen der erfindungsgemäßen Mehrschicht-Abdichtbahn zeigt diese keine oder nur geringe Veränderungen der Oberfläche, der Elastizitätseigenschaften und/oder der Haftung der polymeren und/oder der nichtmetallischen Schicht(en) an der Bitumenschicht durch Witterungseinflüsse. Witterungseinflüsse sind beispielsweise durch "künstliche Bewitterung" gemäß DIN 53387, Lagerung in Wasser und/oder bei erhöhten Temperaturen bestimmbar. Bevorzugte Ausführungsformen der erfindungsgemäßen Mehrschicht-Abdichtbahn sind überraschend stabil gegenüber Umwelteinflüssen und/oder zeigen keine oder nur geringe Veränderungen der Schälfestigkeit, der Scherzugfestigkeit und/oder des Bruchwiderstandes nach Lagerung bei erhöhten Temperaturen, in Wasser und/oder nach künstlicher Bewitterung gemäß DIN 53387.

Vorzugsweise weist die Mehrschicht-Abdichtbahn nach einem "oven test", einer Lagerung bei 80°C, beispielsweise während 28 Tagen, keine oder nur geringe Änderungen der Schälfestigkeit auf. Bevorzugt stimmt die Schälfestigkeit der Prüfkörper nach der Lagerung bei 80°C während 28 Tagen mit der Schälfestigkeit vor der Lagerung bei 80°C überein.

Weiterhin bevorzugt treten keine oder nur geringe Änderungen der Schälfestigkeit der Mehrschicht-Abdichtbahn nach künstlicher Bewitterung der Mehrschicht-Abdichtbahn gemäß DIN 53387 auf. Bevorzugt treten keine oder nur geringe Änderungen der Schälfestigkeit der Mehrschicht-Abdichtbahn nach einer Bewitterung gemäß DIN 53387 von 6 Monaten, besonders bevorzugt 9 Monaten, weiterhin bevorzugt einem Jahr, auf.

Weiterhin treten bevorzugt keine oder nur geringe Änderungen der Schälfestigkeit der Mehrschicht-Abdichtbahn nach einer Lagerung der Mehrschicht-Abdichtbahn in Wasser auf. Vorzugsweise treten keine oder nur geringe Änderungen der Schälfestigkeit der Mehrschicht-Abdichtbahn nach einer Lagerung von 6 Monaten, bevorzugt 9 Monaten, weiterhin bevorzugt einem Jahr, in Wasser bei 23°C auf.

Bevorzugte Ausführungsformen der Mehrschicht-Abdichtbahn weisen nach einem Monat, vorzugsweise 6 Monaten, besonders bevorzugt einem Jahr, weiter bevorzugt zwei bis drei Jahren künstlicher Bewitterung keine oder nur sehr geringe Veränderung der oberflächlichen Farbpolymerschicht auf, insbesondere keine oder nur sehr geringe Abweichungen bestimmbar durch IR-Spektren. In ganz besonders bevorzugten Ausführungsformen der erfindungsgemäßen Mehrschicht-Abdichtbahn weist diese eine oberflächliche Farbolymerschicht wie LUCOFIN^{®} 1410, erhältlich bei der Lucobit AG, auf, die nach einem Jahr, vorzugsweise 15 Monaten, besonders bevorzugt zwei bis drei Jahren künstlicher Bewitterung nach DIN 53387 in einem QUV-Bewitterungsgerät keine oder nur sehr geringe durch IR-Spektren bestimmbare Veränderungen der oberflächlichen Farbpolymerschicht aufweist.

Die erfindungsgemäße farbige verschweißbare Mehrschicht-Abdichtbahn kann Flammschutzmittel umfassen, welche beispielsweise in die Farbpolymerschicht eingearbeitet sind. Die Menge des Flammschutzmittels ist so gewählt, dass auch durch die Einarbeitung von Flammschutzmittel in die Farbpolymerschicht die Verschweißbarkeit der Abdichtbahn gewährleistet ist, so dass man in nur einem Arbeitsschritt, d.h. durch verschweißen der Abdichtbahnen miteinander, Flamm und/oder Flugfeuer geschützte farbige Abdichtbahnen erhält. Dies bietet sowohl eine Zeitersparnis als auch eine Materialersparnis gegenüber herkömmlichen Abdichtbahnen. Die erfindungsgemäße Mehrschicht-Abdichtbahn lässt sich zu Reparaturzwecken mit weiteren Mehrschicht-Abdichtbahnen, Bitumenbahnen, Polymerbahnen und/oder anderen verschweißfähigen Materialien ohne weiteres unmittelbar verschweißen.

Weiterhin ist erfindungsgemäß vorgesehen, dass die Farbpolymerschicht, Schutzschicht, Haftvermittlerschicht, Trägerschicht, Bitumenschicht und/oder Sperrschicht Flammschutzmittel umfassen kann.

Die erfindungsgemäße Mehrschicht-Abdichtbahn kann ferner wenigstens eine Schicht umfassend Flammschutzmittel aufweisen. Diese Schicht kann an beliebiger Stelle in der Schichtenanordnung der Mehrschicht-Abdichtbahn vorliegen.

Erfindungsgemäß verwendbare Flammschutzmittel sind beispielsweise ausgewählt aus der Gruppe umfassend Wasser-, CO₂-, und/oder Chlorabspaltende Chemikalien, chlorierte und/oder bromierte Substanzen, Metalloxide, Zinkborate, roter Phosphor, Ammoniumpolyphosphat, Antimontrioxid, aminhaltige UV-Stabilisatoren, beispielsweise sogenannte HALS (Hindered Amine Light Stabilizer) mit flammhemmender Wirkung wie Flamstab NOR 116 erhältlich bei der Firma Ciba, expandierbarer Graphit und/oder Mischungen davon. Besonders bevorzugt weist die Farbpolymerschicht und/oder Sperrschicht das Flammschutzmittel expandierbaren Graphit auf.

Der Anteil an Flammschutzmittel in einer Schicht, insbesondere der verschweißbaren Farbpolymerschicht, der erfindungsgemäßen Mehrschicht-Abdichtbahn kann beispielsweise im Bereich von 0,1 Gew.-% bis 50 Gew.-%, bevorzugt im Bereich von 20 Gew.-% bis 40 Gew.-% liegen. Der Anteil an wasserabspaltenden Flammschutzmitteln wie Mg(OH)₂ und/oder Al(OH)₃ in der Farbpolymerschicht kann beispielsweise im Bereich von 15 Gew.-% bis 55 Gew.-%, vorzugsweise im Bereich von 20 Gew.-% bis 50 Gew.-%, liegen. Die Angabe in Gew.-% ist hierbei bezogen auf das Gesamtgewicht der Schicht.

In einer besonders bevorzugten Ausführungsform der erfindungsgemäßen farbigen verschweißbaren Mehrschicht-Abdichtbahn ist die nichtmetallische Sperrschicht flammschutzmittelfrei. Auf Polyvinylchloriden (PVC) basierende Farbpolymerschichten können weiterhin bevorzugt frei von Flammschutzmitteln sein. Die Haftvermittlerschicht(en) der erfindungsgemäßen farbigen verschweißbaren Mehrschicht-Abdichtbahn umfassen ferner bevorzugt kein(e) Flammschutzmittel. In weiterhin bevorzugten Ausführungsformen der erfindungsgemäßen farbigen verschweißbaren Mehrschicht-Abdichtbahn umfassen die Bitumenschicht(en) bevorzugt Flammschutzmittel. Es kann auch bevorzugt sein, dass die Bitumenschicht(en) kein(e) Flammschutzmittel aufweisen. In bevorzugten Ausführungsformen der farbigen verschweißbaren Mehrschicht-Abdichtbahn weist diese keine Flammschutzmittel auf. Weiterhin ist vorzugsweise die Farbpolymerschicht flammschutzmittelfrei.

Flammschutzmittel der erfindungsgemäßen Mehrschicht-Abdichtbahn können in eine oder mehrere Schichten der Mehrschicht-Abdichtbahn eingebracht werden und/oder in Form einer Flammschutzschicht vorliegen. Die Flammschutzschicht weist Flammschutzmittel auf, und kann ebenfalls geeignete Materialien und/oder Zusätze aufweisen, welche die Flammschutzmittel zu einer zusammenhängenden Schicht verbinden, wie polymere Zusätze oder Bindemittel. Bevorzugt umfasst die farbige verschweißbare Mehrschicht-Abdichtbahn wenigstens eine Flammschutzschicht.

Die Flammschutzschicht kann an beliebiger Stelle innerhalb der Schichtenanordnung der erfindungsgemäßen Mehrschicht-Abdichtbahn angeordnet sein. Bevorzugt ist die Flammschutzschicht zwischen der äußeren Farbpolymerschicht und einer nichtmetallischen Sperrschicht und/oder die Flammschutzschicht ist zwischen der Farbpolymerschicht und der Bitumenschicht angeordnet.

Bevorzugt weist die Mehrschicht-Abdichtbahn eine Flammschutzschicht unterhalb der Farbpolymerschicht auf, besonders bevorzugt ist die Flammschutzschicht zwischen der Farbpolymerschicht und der nichtmetallischen Sperrschicht angeordnet.

Die Farbpolymerschicht kann expandierbaren Graphit (sogenannten Bläh-Graphit) als Flammschutzmittel aufweisen, wodurch eine graue Färbung der Polymerschicht entstehen kann. Die Flammschutzmittel können ebenfalls eine lichtabsorbierende Wirkung aufweisen.

Die Farbpolymerschicht kann lichtreflektierende Mittel und/oder lichtabsorbierende Mittel aufweisen, beispielsweise kann die Farbpolymerschicht lichtreflektierend und lichtabsorbierend ausgebildet sein.

Vorzugsweise ist die erfindungsgemäße Mehrschicht-Abdichtbahn gegenüber UV-Strahlung stabilisiert ausgebildet, bevorzugt ist insbesondere die oberflächliche Farbpolymerschicht gegenüber UV-Strahlung stabilisiert ausgebildet. Ein Schutz vor einem Abbau der Polymerschicht durch UV-Strahlung kann beispielsweise durch einen Zusatz von UV-Stabilisatoren und/oder UV-Absorbern bewirkt werden. In bevorzugten Ausführungsformen umfasst die erfindungsgemäße Mehrschicht-Abdichtbahn UV-Stabilisatoren, vorzugsweise umfasst die Farbpolymerschicht UV-Stabilisatoren ausgewählt aus der Gruppe umfassend sogenannte HALS und/oder sogenannte UV-Absorber. Besonders bevorzugt umfasst die Farbpolymerschicht HALS, weiterhin bevorzugt umfasst die Farbpolymerschicht eine Kombination aus HALS und UV-Absorbern. In weiterhin bevorzugten Ausführungsformen der Mehrschicht-Abdichtbahn kann die Farbpolymerschicht jedoch auch frei von UV-Stabilisatoren sein, insbesondere z.B. wenn die Farbpolymerschicht Ruß enthält.

Vorzugsweise weist die Farbpolymerschicht UV-Stabilisatoren im Bereich von ≥ 0 Gew.-% bis ≤ 2 Gew.-%, bevorzugt im Bereich von ≥ 0,05 Gew.-% bis ≤ 1 Gew.-%, besonders bevorzugt im Bereich von ≥ 0,1 Gew.-% bis ≤ 0,6 Gew.-%, ganz besonders bevorzugt im Bereich von ≥ 0,2 Gew.-% bis ≤ 0,4 Gew.-%, bezogen auf das Gesamtgewicht der Farbpolymerschicht auf. Hierbei kann die Farbpolymerschicht HALS oder UV-Absorber aufweisen, in bevorzugten Ausführungsformen weist die Farbpolymerschicht HALS und UV-Absorber auf. Die Farbpolymerschicht kann HALS und/oder UV-Absorber in beliebigen Mischungen aufweisen, vorzugsweise umfasst die Farbpolymerschicht HALS im Bereich von ≥ 0,05 Gew.-% bis ≤ 1 Gew.-% und/oder UV-Absorber im Bereich von ≥ 0 Gew.-% bis ≤ 1 Gew.-%, bezogen auf das Gesamtgewicht der Farbpolymerschicht.

Es ist in bevorzugten Ausführungsformen der Mehrschicht-Abdichtbahn vorgesehen, dass die Farbpolymerschicht HALS aufweist. Vorzugsweise umfasst die Farbpolymerschicht HALS im Bereich von ≥ 0,05 Gew.-% bis ≤ 1 Gew.-%, bevorzugt im Bereich von ≥ 0,1 Gew.-% bis ≤ 0,5 Gew.-%, besonders bevorzugt im Bereich von ≥ 0,2 Gew.-% bis ≤ 0,4 Gew.-%, bezogen auf das Gesamtgewicht der Farbpolymerschicht. Vorzugsweise verwendbare HALS sind beispielsweise ausgewählt aus der Gruppe umfassend TINUVIN^{®}- und/oder CHIMASSORB^{®}-Produkte erhältlich bei der Firma Ciba, bevorzugt CHIMASSORB^{®}944 und/oder TINUVIN^{®}622.

Es kann in weiterhin bevorzugten Ausführungsformen der Mehrschicht-Abdichtbahn vorgesehen sein, dass die Farbpolymerschicht UV-Absorber aufweist, es können jedoch ebenfalls Ausführungsformen vorgesehen sein, die keine UV-Absorber aufweisen. Der Anteil an UV-Absorbern in der Farbpolymerschicht liegt vorzugsweise im Bereich von ≥ 0 Gew.-% bis ≤ 1 Gew.-%, bevorzugt im Bereich von ≥ 0,01 Gew.-% bis ≤ 0,4 Gew.-%, besonders bevorzugt im Bereich von ≥ 0,05 Gew.-% bis ≤ 0,2 Gew.-%, bezogen auf das Gesamtgewicht der Farbpolymerschicht. Vorzugsweise verwendbare UV-Absorber sind beispielsweise ausgewählt aus der Gruppe umfassend TINUVIN^{®}- und/oder CHIMASSORB^{®}-Produkte erhältlich bei der Firma Ciba, bevorzugt TINUVN^{®}123.

Die Farbpolymerschicht basiert vorzugsweise auf Polymeren ausgewählt aus der Gruppe umfassend Polyolefine, Polyamide, Polyvinylchloride (PVC), thermoplastische Polymere und/oder Elastomere.

Die Farbpolymerschicht der farbigen verschweißbaren Mehrschicht-Abdichtbahn basiert vorzugsweise auf Polymeren ausgewählt aus der Gruppe umfassend Polyvinylchloride (PVC), Derivate von Polyvinylchloridverbindungen, chloriertes Polyethylen (CPE), Ethylenpolypropylendienmonomer, Derivate von Ethylenpolypropylendienmonomer-Verbindungen, thermoplastische Legierungen flexibler Polyolefine (FPO), thermoplastische Polyolefinlegierungen (TPO), Ethylencopolymerisate wie Ethylen-Vinylacetat-Copolymer (EVA), Ethylen-Butylacrylat-Copolymer (EBA), Ethylen-Acrylsäure-Copolymer (EAA), Ethylen-Methylacrylat-Copolymer (EMA), Polyethylencopolymeren, Polyethylen niederer Dichte (low density Polyethylen, LDPE), lineares Polyethylen niederer Dichte (linear low density polyethylene, LLDPE), Polyethylen sehr niederer Dichte (very low density polyethylene, VLDPE), Metallocen-katalysiertes lineares Polyethylen niederer Dichte (metallocene-based linear low density polyethylene, m-LLDPE), Metallocen-katalysiertes Polyethylen sehr niederer Dichte (metallocene-based very low density polyethylene, m-VLDPE), Ethylenvinylalkohol, Polypropylene, Polypropylen-Copolymere, amorphes Poly-alpha-Olefin (APAO) und/oder Mischungen davon.

Insbesondere sind unter den Polyethylenen und Polyethylencopolymeren Ethylen-Vinylacetat-Copolymer (EVA), Ethylen-Butylacrylat-Copolymer (EBA), very low density polyethylene (VLDPE), Metallocen-katalysiertes lineares Polyethylen niederer Dichte (metallocene-based linear low density polyethylene, m-LLDPE), Metallocen-katalysiertes Polyethylen sehr niederer Dichte (metallocene-based very low density polyethylene, m-VLDPE) bevorzugt. Neben flexiblen Polyethylenen und deren Kombinationen sind aber auch flexible, elastische Polypropylene, beispielsweise ADFLEX^{®} , ADSTIN^{®} oder HIFAX^{®}, erhältlich bei der Firma Basell, geeignet. Besonders bevorzugt ist ein TPO wie LUCOFIN® 1410, erhältlich bei der Lucobit AG, geeignet.

Ganz besonders bevorzugt sind Polymere, die bei allen Außentemperaturen flexibel sind, beispielsweise Polymere, die bei erhöhter Sonneneinstrahlung im Sommer bei Temperaturen über 80°C, und/oder im Winter bei Temperaturen von bis zu 0°C, vorzugsweise bis zu -10°C, besonders bevorzugt bis zu -40°C, ganz besonders bevorzugt bis zu -50°C, flexibel sind.

Polymerschichten auf Basis von Polyvinylchloriden (PVC) und Derivaten davon können übliche Weichmacher aufweisen, beispielsweise synthetische Esterweichmacher, Phthalsäureester, Phosphorsäureester, polymere Weichmacher, Thermoplaste und/oder Elastomere sowie Gemische hiervon. Durch den Einsatz von Weichmachern ergibt sich eine flexible Polymerschicht und ebenfalls eine flexible Mehrschicht-Abdichtbahn. Der Anteil an Weichmachern kann in weiten Bereichen variieren, der Anteil an Weichmacher entscheidet ob sogenanntes Hart- oder Weich-PVC vorliegt.

In bevorzugten Ausführungsformen weist die Farbpolymerschicht Weichmacher, bevorzugt polymere Weichmacher, auf.

Die erfindungsgemäß verwendbare Farbpolymerschicht, deren äußere obere Oberfläche der Umwelt ausgesetzt ist, kann jede Farbe aufweisen. Bevorzugte Farben sind insbesondere grau, weiß und beige sowie sogenannte bunte Farben, wie rot, gelb, blau, grün, orange etc.. Die Farbpolymerschicht kann aber auch schwarz sein.

Die Farbpolymerschicht kann mit üblichen im Stand der Technik bekannten Pigmenten gefärbt werden, wobei ein oder mehrere Pigmente und optional weitere Zusätze verwendet werden können. Geeignete Farbpigmente sind sowohl anorganische wie auch organische Farbpigmente, beispielsweise Metalloxide wie Chrom- oder Titanoxide, Metalloxidhydroxide, Metallsulfide, Azofarbstoffe, beispielsweise Mono- und Diazopigmente, welche auch kondensiert sein können, sowie deren Metallsalze, Phthalocyaninfarbstoffe, Flavanthron, Chinacridone, Thioindigo, Anthrachinonpigmente, Azomethinderivate, Derivate von sauren oder basischen Farbstoffen, deren Salze und/oder Ruß. Vorteilhafter Weise können ferner handelsübliche Pigmentzusammensetzungen verwendet werden.

Die erfindungsgemäße Mehrschicht-Abdichtbahn umfasst wenigstens eine verschweißbare Farbpolymerschicht. Weiterhin kann die erfindungsgemäße Mehrschicht-Abdichtbahn auch mehrere Farbpolymerschichten, wenigstens 2, vorzugsweise 3 oder 4, gleicher oder unterschiedlicher Beschaffenheit, aufweisen.

Vorteilhafter Weise weist die farbige verschweißbare Mehrschicht-Abdichtbahn eine nichtmetallische Sperrschicht auf. Vorzugsweise ist die nichtmetallische Sperrschicht eine polymere Schicht. Ein Vorteil der nichtmetallischen Sperrschicht wird dadurch zur Verfügung gestellt, dass diese die Elastizität der Mehrschicht-Abdichtbahn nicht in einem Maße mindert wie dies eine unflexible, beispielsweise eine metallische Sperrschicht verursacht. Darüber hinaus ist die Bruchgefahr der nichtmetallischen Sperrschicht gegenüber einer unflexiblen Sperrschicht vermindert, und somit die Gefahr, dass Öle aus dem Bitumen durch Brüche oder Risse durch die Sperrschicht gelangen.

Die nichtmetallische Sperrschicht ist vorzugsweise eine polymere Schicht. Die farbige verschweißbare Mehrschicht-Abdichtbahn zeichnet sich in bevorzugten Ausführungsformen dadurch aus, dass die nichtmetallische Sperrschicht eine polymere Schicht ist, wobei die polymere nichtmetallische Sperrschicht vorzugsweise Polymere aufweist, ausgewählt aus der Gruppe umfassend Polyamid, Ethylenvinylalkohol, Polyester und/oder Gemische hiervon.

Eine nichtmetallische Sperrschicht basierend auf Polymeren ausgewählt aus der Gruppe umfassend Polyamid, Ethylenvinylalkohol, Polyester und/oder Gemischen hiervon zeichnet sich insbesondere dadurch aus, dass die Sperrwirkung darauf beruht, dass Öle aus Bitumen nicht in und/oder durch die Sperrschicht gelangen. Dies bedeutet einen großen Vorteil gegenüber Sperrschichten, die Öle aufnehmen, wie solchen basierend auf Cellulose oder ähnlichen Polymeren. Sperrschichten, die migrierende Bestandteile insbesondere Öle aufnehmen und anreichern, sind zwar aufgrund ihrer Ölbeständigkeit stabil, durch die Anreicherung werden die migrierenden Bestandteile jedoch nicht vor der Sperrschicht aufgehalten, sondern gelangen in die Sperrschicht und bei einer die Kapazität der Sperrschicht übersteigenden Anreicherung auch durch diese hindurch an die Oberfläche, wo sie Farbveränderungen verursachen können und möglicherweise die mechanischen Eigenschaften beeinträchtigen.

Ein weiterer Vorteil einer nichtmetallischen Sperrschicht basierend auf Polymeren ausgewählt aus der Gruppe umfassend Polyamid, Ethylenvinylalkohol, Polyester und/oder Gemischen hiervon wird dadurch verwirklicht, dass diese keine organischen Bestandteile, beispielsweise Öle und/oder schwefelhaltige Verbindungen, insbesondere aus Bitumen aufnehmen. Migrierende organische Bestandteile aus Bitumen gelangen somit nicht in die Sperrschicht hinein, sondern werden bereits an deren der Bitumenschicht zugewandten Fläche zurückgehalten. Insbesondere weisen polymere nichtmetallische Sperrschichten basierend auf Polymeren ausgewählt aus der Gruppe umfassend Polyamid, Ethylenvinylalkohol, Polyester und/oder Gemischen hiervon eine gute Sperrwirkung gegenüber migrierenden organischen Bestandteilen, insbesondere Ölen und/oder schwefelhaltigen Verbindungen, auf. Dies ist insbesondere von Vorteil, da möglicherweise gebildete Säuren die UV-Stabilität der Farbpolymerschicht zerstören können.

Ein großer Vorteil einer nichtmetallischen Sperrschicht basierend auf Polymeren ausgewählt aus der Gruppe umfassend Polyamid, Ethylenvinylalkohol, Polyester und/oder Gemischen hiervon ist, dass diese eine hervorragende Sperrwirkung wie metallische Sperrschichten aufweisen, sich darüber hinaus aber auch durch Flexibilität und gute Verschweißbarkeit auszeichnen. Die erfindungsgemäße Mehrschicht-Abdichtbahn zeichnet sich entsprechend durch eine langfristige Farb- und UV-Stabilität der Oberfläche als auch durch gute Flexibilität und Verschweißbarkeit aus.

Ein besonders geeignetes Polymer zur Ausbildung der nichtmetallischen Sperrschicht ist Polyamid. Polyamid weist eine besonders gute Sperrwirkung gegenüber migrierenden organischen Bestandteilen, insbesondere Ölen und/oder schwefelhaltigen Verbindungen, auf und kann ein Migrieren von Ölen und/oder schwefelhaltigen Verbindungen aus Bitumen an die Oberfläche der Mehrschicht-Abdichtbahn zuverlässig verhindern.

Eine nichtmetallische Sperrschicht basierend auf Polyamid weist weiterhin eine gute Elastizität auf, wodurch die Bruchgefahr und somit die Gefahr, dass Öle aus dem Bitumen durch die Sperrschicht gelangen, weiter vermindert ist.

Bevorzugt weist die polymere nichtmetallische Sperrschicht Mischungen von Polymeren auf, besonders bevorzugt Mischungen von Polyamiden und/oder Polyolefinen, vorzugsweise weist sie handelsübliche Mischungen auf. In einer weiteren vorteilhaften Ausgestaltung der Erfindung umfasst die polymere nichtmetallische Sperrschicht als einziges Polymer Polyamid. Zusätzlich kann die polymere nichtmetallische Sperrschicht die in polymeren Zusammensetzungen üblichen Zusätze, beispielsweise Flammschutzmittel und/oder Stabilisatoren, aufweisen.

Die polymere nichtmetallische Sperrschicht kann eine Dicke im Bereich von 10 µm bis 400 µm, bevorzugt im Bereich von 30 µm bis 350 µm und ganz besonders bevorzugt im Bereich von 50 µm bis 100 µm aufweisen.

In vorteilhafter Weise ist die polymere nichtmetallische Sperrschicht verschweißbar ausgebildet. Die polymere nichtmetallische Sperrschicht ist flexibel und kann so im Gegensatz zu metallischen Sperrschichten eine thermische Ausdehnung der Mehrschicht-Abdichtbahn beim Verschweißen nachvollziehen und verbessert somit in vorteilhafter Weise nicht nur die eigentliche Verschweißbarkeit der Mehrschicht-Abdichtbahn sondern auch die Flexibilität der Abdichtbahn und die Anpassung an den abzudichtenden Untergrund und somit die Verwendbarkeit der Mehrschicht-Abdichtbahn auf nicht planen Oberflächen.

Die nichtmetallische Sperrschicht ist in vorteilhafter Weise zwischen der Farbpolymerschicht und einer nachfolgenden kaschierbaren Materialschicht, bevorzugt einer Bitumenschicht, angeordnet. Die nichtmetallische Sperrschicht verhindert den Durchtritt der im Bitumen enthaltenen Öle an die Oberfläche der Mehrschicht-Abdichtbahn und die Ausbildung öliger Flecken an der exponierten und sichtbaren Oberfläche. Die polymere Sperrschicht ist bevorzugt ölundurchlässig ausgebildet. Ferner verhindert die nichtmetallische Sperrschicht den Durchtritt schwefelhaltiger Verbindungen und Säuren aus der Bitumenschicht in die oberflächlichen polymeren Schichten und dadurch die Zerstörung der in den polymeren Schichten enthaltenen stickstoffhaltigen UV-Stabilisatoren Insbesondere aminhaltige UV-Stabilisatoren, beispielsweise sogenannte HALS (Hindered Amine Light Stabilizer), wie TINUVIN^{®}, CHIMASSORB^{®} oder Flamstab NOR 116, erhältlich bei der Firma Ciba, werden durch aus Bitumenschichten austretende schwefelhaltige Säuren zerstört.

Die nichtmetallische Sperrschicht schützt die Mehrschicht-Abdichtbahn vor der Migration von im Bitumen enthaltenen Ölen in die oberen Polymerschichten, insbesondere die oberflächliche Farbpolymerschicht.

Erfindungsgemäß wird wenigstens eine Bitumenschicht verwendet, oder es können mehrere Bitumenschichten verwendet werden, um die erwünschte Beschaffenheit und Eigenschaften der Bitumenschicht zu erhalten.

Die erfindungsgemäß verwendbare Bitumenschicht kann jedes im Stand der Technik bekannte Bitumen umfassen, beispielsweise Destillations-, Hochvakuum- oder geblasenes Bitumen, Normenbitumen und/oder Gemische hiervon. Es lassen sich allgemein auch handelsübliche Mischungen verwenden.

Weiterhin kann die Bitumenschicht geeignete Zusätze zur Modifizierung ihrer Eigenschaften wie Polymere, wie Polyolefine, Polyethylene, Polypropylene, amorphes Polyolefin (APO), beispielsweise ADFLEX^{®}, amorphes Poly-alpha-Olefin (APAO), ataktisches Polypropylen (APP), Ethylen-Propylen- Kautschuk (EPM), Ethylen-Propylen-Dien-Kautschuk (EPDM), Elastomere wie Styrol-Butadienstyrol (SBS), Styrol-ethylen/butylen-styrol (SEBS), Styrolethylen/propylen-styrol (SEPS), Weichmacher, Füllstoffe, Flammschutzmittel, Stabilisatoren und/oder Additive aufweisen.

Die Bitumenschicht kann sowohl selbstklebend als auch nichtklebend oder wenig klebend ausgebildet sein. Die adhäsiven Eigenschaften der Bitumenschicht lassen sich in an sich bekannter Weise einstellen.

Die Schichtdicke der Bitumenschicht der farbigen, verschweißbaren Mehrschicht-Abdichtbahn liegt bevorzugt im Bereich von 1 mm bis 5 mm, vorzugsweise im Bereich von 1,1 mm bis 4 mm, weiterhin bevorzugt im Bereich von 1,25 mm bis 3 mm, besonders bevorzugt liegt die Schichtdicke im Bereich von 1,5 mm bis 2,5 mm und am meisten bevorzugt bei 2 mm.

Die Schichten der Mehrschicht-Abdichtbahn können durch geeignete Haftvermittler verbunden werden. Weiterhin können die Schichten auch durch geeignete Verfahren wie Laminieren und Co-Extrudieren miteinander verbunden sein. Weiterhin können die verschiedenen Schichten durch verschiedene Techniken miteinander verbunden sein, beispielsweise können zwei oder mehrere miteinander durch Laminieren oder Co-Extrudieren verbundene Schichten mit weiteren Schichten durch einen oder mehrere Haftvermittler verbunden werden.

Ein Vorteil der farbigen verschweißbaren Mehrschicht-Abdichtbahn kann durch eine Verwendung von Haftvermittler und/oder Haftvermittlerschichten zur Verbindung der Schichten der Mehrschicht-Abdichtbahn verwirklicht werden. Diese können die Schichten der Mehrschicht-Abdichtbahn ortsfest und/oder nicht ablösbar miteinander verbinden. Bevorzugt verwendbare Haftvermittler sind beispielsweise ausgewählt aus der Gruppe umfassend spezielle Polyethylen-Copolymere, wie Ethylen-Acrylsäure-Copolymer und/oder Ethylen-Acrylsäure-Copolymer enthaltende Gemische.

Geeignete Haftvermittler sind bevorzugt ausgewählt aus der Gruppe umfassend Reaktivklebstoffe, Adhäsivklebstoffe, druckempfindliche Klebstoffe und/oder Hotmelts, bevorzugt Ethylen-Acrylsäure-Copolymer und/oder Ethylen-Acrylsäure-Copolymer enthaltende Gemische.

Besonders geeignete Haftvermittler sind Ethylen-Acrylsäure-Copolymer enthaltende Gemische. Jedoch sind erfindungsgemäß auch andere im Stand der Technik übliche Haftvermittler geeignet.

Die verwendeten Haftvermittler können additiviert sein, beispielsweise mit Stabilisatoren und/oder Flammschutzmitteln.

Vorteilhafter Weise weist die farbige verschweißbare Mehrschicht-Abdichtbahn wenigstens eine, vorzugsweise zwei, noch bevorzugter mehrere Haftvermittlerschichten auf. Die Haftvermittlerschichten verbinden die mit der Haftvermittlerschicht kontaktierenden Schichten ortsfest miteinander.

Ferner können erfindungsgemäß zur Haftvermittlung in einer Mehrschicht-Abdichtbahn mehrere Haftvermittlerschichten aus gleichen oder verschiedenen geeigneten Haftvermittlern verwendet werden, wobei die verschiedenen Haftvermittlerschichten auch in unterschiedlichen Mischungsverhältnissen oder Schichtdicken aufgebracht werden können. Die Schichtdicke der Haftvermittlerschichten liegt bevorzugt im Bereich von 10 µm bis 200 µm, vorzugsweise im Bereich von 20 µm bis 80 µm, besonders bevorzugt im Bereich von 30 µm bis 50 µm. In ganz besonders bevorzugten Ausführungsformen liegt die Schichtdicke der Haftvermittlerschichten im Bereich von ≥ 10 µm bis ≤ 20 µm.

Haftvermittlerschichten weisen eine Haftfestigkeit auf, die beispielsweise von der Dicke der Haftvermittlerschicht abhängt. Vorzugsweise weisen verwendbare Haftvermittlerschichten eine Schälfestigkeit bestimmbar nach DIN 53357 im Bereich von ≥ 50 N/5 cm bis ≤ 1000 N/5 cm, bevorzugt im Bereich von ≥ 150 N/5 cm bis ≤ 250 N/5 cm, auf.

In bevorzugten Ausführungsformen der Mehrschicht-Abdichtbahn ist wenigstens eine Haftvermittlerschicht zwischen der Farbpolymerschicht und der nichtmetallischen Sperrschicht und/oder wenigstens eine Haftvermittlerschicht zwischen der nichtmetallischen Sperrschicht und der Bitumenschicht angeordnet.

Bevorzugt umfasst die Mehrschicht-Abdichtbahn eine Haftvermittlerschicht zwischen der Farbpolymerschicht und der nichtmetallischen Sperrschicht. Vorteilhaft verwendbare Haftvermittler sind insbesondere Schmelzklebstoffe, die beispielsweise während der Extrusion zwischen der Farbpolymerschicht und der nichtmetallischen Sperrschicht aufgebracht werden können.

In einer bevorzugten Ausführungsform der erfindungsgemäßen Mehrschicht-Abdichtbahn verbindet eine Haftvermittlerschicht eine Farbpolymerschicht mit einer nichtmetallischen Sperrschicht ortsfest.

In einer weiteren bevorzugten Ausführungsform der erfindungsgemäßen Mehrschicht-Abdichtbahn verbindet eine Haftvermittlerschicht eine nichtmetallische Sperrschicht mit einer Bitumenschicht ortsfest.

In noch einer weiteren Ausführungsform verbindet eine Haftvermittlerschicht eine Flammschutzschicht mit einer Bitumenschicht ortsfest.

Bevorzugt sind durch eine Haftvermittlerschicht, die zwischen einer Farbpolymerschicht und einer nichtmetallischen Sperrschicht angeordnet ist, die Farbpolymerschicht und die nichtmetallische Sperrschicht nichtablösbar miteinander verbunden. Weiterhin bevorzugt sind durch eine weitere Haftvermittlerschicht, die zwischen der nichtmetallischen Sperrschicht und einer Bitumenschicht angeordnet ist, die nichtmetallische Sperrschicht und die Bitumenschicht nichtablösbar miteinander verbunden.

Es können weiterhin Ausführungsformen bevorzugt sein, bei welchen die Mehrschicht-Abdichtbahn keine Haftvermittlerschicht zwischen nichtmetallischer Sperrschicht und Bitumenschicht aufweist. So kann eine nichtmetallische Sperrschicht auf eine Bitumenschicht auch mittels Laminierungsverfahren aufgebracht sein.

Vorteilhafterweise weisen die auf der Bitumenschicht aufgebrachten nichtmetallischen und/oder polymeren Schichten, beispielsweise eine Farbpolymerschicht, eine nichtmetallische Sperrschicht und/oder eine Schichtenanordnung davon, eine gute Haftung auf der Bitumenschicht auf. Die Haftung der Schichten auf der Bitumenschicht ist beispielsweise durch Ermittlung der Schälfestigkeit nach DIN 53357 bestimmbar.

Zur Messung der Eigenschaften der Mehrschicht-Abdichtbahn gemäß den DIN-Normen werden Prüfkörper der Mehrschicht-Abdichtbahn mit einer Länge von 300 mm und einer Breite von 50 mm verwendet.

Die Schälfestigkeit der Mehrschicht-Abdichtbahn und/oder die Schälfestigkeit zwischen der auf der Bitumenschicht aufgebrachten nichtmetallischen und/oder polymeren Schicht und der Bitumenschicht liegt bevorzugt im Bereich von ≥ 50 N/5 cm bis ≤ 1000 N/5 cm, vorzugsweise im Bereich von ≥ 150 N/5 cm bis ≤ 250 N/5 cm.

In bevorzugten Ausführungsformen weist die farbige verschweißbare Mehrschicht-Abdichtbahn gute Bruchwiderstände auf. Der Bruchwiderstand der farbigen verschweißbaren Mehrschicht-Abdichtbahn wird nach DIN 53504 an Prüfkörpern mit einer Länge von 300 mm und einer Breite von 50 mm ermittelt. Der Bruchwiderstand bezieht sich hierbei auf den Widerstand in Längs- und/oder Quer-Richtung. Vorzugsweise liegt der Bruchwiderstand der farbigen verschweißbaren Mehrschicht-Abdichtbahn im Bereich von ≥ 300 N/5 cm bis ≤ 1000 N/5 cm, bevorzugt im Bereich von ≥ 600 N/5 cm bis ≤ 800 N/5 cm, besonders bevorzugt im Bereich von ≥ 650 N/5 cm bis ≤ 700 N/5 cm.

Die farbige verschweißbare Mehrschicht-Abdichtbahn kann an ihrer Unterseite eine Schutzschicht aufweisen, wobei die Schutzschicht bevorzugt als verschweißbare, nicht verschweißbare und/oder abziehbare Schicht ausgebildet ist. Als "Unterseite" im Sinne dieser Anmeldung wird die der der Umwelt ausgesetzten Oberfläche der Farbpolymerschicht entgegengesetzte Oberfläche der Mehrschicht-Abdichtbahn bezeichnet. Bevorzugt ist die Unterseite die bitumenhaltige Schicht.

Die Schutzschicht ist bevorzugt als Schutzfolie ausgebildet, welche eine Bitumenschicht, eine auf der Unterseite der Bitumenschicht angebrachte Haftvermittlerschicht oder eine aufgebrachte Klebstoffschicht, teilweise oder vollständig bedecken kann. Ferner kann die Mehrschicht-Abdichtbahn auch eine Textilbeschichtung, bevorzugt an ihrer Unterseite, umfassen.

Die erfindungsgemäße Mehrschicht-Abdichtbahn kann weiterhin Verstärkungsmaterialien aufweisen, welche in wenigstens einer Schicht der Mehrschicht-Abdichtbahn angeordnet sein können.

Bevorzugt ist die farbige verschweißbare Mehrschicht-Abdichtbahn mit Vliesen, Gelegen, Geweben und/oder Kombinationen davon verstärkt.

Bevorzugte Verstärkungsmaterialien sind Vliese, Gelege, Gewebe und/oder Kombinationen davon, beispielsweise basierend auf Glas, Polyolefinen, Polyester und/oder Mischungen davon, ganz besonders bevorzugt umfasst die Mehrschicht-Abdichtbahn ein Glasvlies.

Die farbige verschweißbare Mehrschicht-Abdichtbahn kann ferner mit Verstärkungsmaterialien verstärkt sein, die ausgewählt sind aus der Gruppe umfassend gewebte und/oder nichtgewebte Materialien, wobei nichtgewebte Materialien besonders bevorzugt sind. Die Verstärkungsmaterialien sind bevorzugt in einer Trägerschicht umfasst.

Bevorzugt umfasst die farbige verschweißbare Mehrschicht-Abdichtbahn eine Trägerschicht aus einem gewebten und/oder nicht gewebten Material, wobei das Material vorzugsweise ein nicht metallisches Material ist.

Beispielsweise kann eine in der Mehrschicht-Abdichtbahn vorgesehene Trägerschicht ein Vlies, welches Glas, Polyester oder Polyolefine aufweist, ein Gelege, welches Glas, Polyester oder Polyolefine aufweist und/oder ein Gewebe, welches Glas, Polyester oder Polyolefine aufweist, umfassen. Bevorzugt umfasst die Mehrschicht-Abdichtbahn wenigstens eine Trägerschicht, die erfindungsgemäßen Schichtenstrukturen der Mehrschicht-Abdichtbahn können jedoch auch mehrere Trägerschichten aufweisen.

Die Trägerschicht kann an beliebiger Stelle in die Schichtenanordnung eingearbeitet sein, wobei die Trägerschicht bevorzugt zwischen Sperrschicht und Bitumenschicht oder unterhalb der Bitumenschicht in die Schichtenanordnung eingearbeitet sein kann. Ferner kann das Verstärkungsmaterial auch in einer anderen Schicht umfasst sein, beispielsweise kann die Bitumenschicht Verstärkungsmaterialien aufweisen.

Die Bitumenbahn kann beispielsweise als Verstärkungsmaterial Fasern oder ein Vlies aus Glas umfassen. Diese Verstärkungsmaterialien tragen vorzugsweise zur Formstabilität der erfindungsgemäßen Mehrschicht-Abdichtbahn bei.

Ebenfalls kann die Farbpolymerschicht verstärkt ausgebildet sein. Bevorzugt umfasst die Farbpolymerschicht Verstärkungsmaterialien oder eine Trägerschicht ist zwischen zwei Polymerschichten angeordnet. Die Verstärkungsmaterialien oder Trägerschichten tragen zu einer erhöhten Festigkeit und/oder Formstabilität der erfindungsgemäßen Mehrschicht-Abdichtbahn bei.

Die Farbpolymerschicht weist bevorzugt eine hohe Festigkeit und/oder Formstabilität auf.

Die Farbpolymerschicht kann auch unverstärkt oder mit geeigneten Materialien, vorzugsweise Vliese, Gelege, Gewebe und/oder Kombinationen davon, beispielsweise basierend auf Glas, Polyolefinen, Polyester und/oder Mischungen davon, insbesondere Glasfasern und/oder Glasvliesen, verstärkt sein. Eine besonders bevorzugte Ausführungsform umfasst eine mit einem Glasvlies verstärkte Farbpolymerschicht. Bevorzugt ist das Glasvlies in einer Farbpolymerschicht umfasst oder zwischen zwei Farbpolymerschichten eingebettet.

Ein Vorteil der erfindungsgemäßen Mehrschicht-Abdichtbahn mit einer materialverstärkten Farbpolymerschicht ist eine verbesserte Festigkeit und eine verbesserte Formstabilität. Bevorzugt kann durch eine Verstärkung mit einem Glasvlies eine erhöhte Formstabilität erreicht werden. Mit einer Verstärkung durch ein Gewebe kann eine erhöhte Festigkeit erzielt werden.

Vorzugsweise umfasst die Mehrschicht-Abdichtbahn unterschiedliche Verstärkungsmaterialien und/oder in unterschiedlicher Art, beispielsweise als Vlies, Gelege und/oder Gewebe angeordnete, Verstärkungsmaterialien. Beispielsweise kann eine Bitumenschicht mit Polyestergewebe und eine Farbpolymerschicht mit Glasvlies(en) verstärkt sein. Ferner kann ein Vlies, Gelege und/oder Gewebe auch zwischen verschiedenen Schichten angeordnet sein und/oder in einer Schicht angeordnet sein.

Ein Glasvlies kann beispielsweise zwischen einer Farbpolymerschicht und einer polymeren nichtmetallischen Sperrschicht, beispielsweise basierend auf Polyamid, angeordnet sein.

Weiterhin kann eine Farbpolymerschicht und eine polymere nichtmetallischen Sperrschicht, beispielsweise basierend auf Polyamid, über eine Haftvermittlerschicht verbunden sein und ein Glasvlies kann zwischen der Sperrschicht und einer Bitumenschicht angeordnet sein.

Weiterhin überragt bevorzugt wenigstens eine Farbpolymerschicht, vorzugsweise die äußere Farbpolymerschicht den äußeren Rand der Bitumenschicht wenigstens teilweise, vorzugsweise vollständig. Bevorzugt überragt die äußere, obere Farbpolymerschicht und die nichtmetallische Sperrschicht die darunter angeordnete(n) Schicht(en), insbesondere die Bitumenschicht, wenigstens teilweise, vorzugsweise vollständig. Der Randbereich der überragenden äußeren Farbpolymerschichten und/oder nichtmetallischen Sperrschicht ist vorzugsweise verklebbar und/oder verschweißbar. Die überragenden Schichten können mit den darunter liegenden Abdichtbahnen oder anderen Materialien derart verklebt und/oder verschweißt werden, so dass kein Bitumen oder Bitumenöl beim Verlegen und Verschweißen an die Oberfläche der Mehrschicht-Abdichtbahnen dringt.

Diese Ausführungsform führt erfindungsgemäß dazu, dass an den Seitenbereichen der verlegten Mehrschicht-Abdichtbahnen hervortretendes Bitumen durch die überragende Sperrschicht abgedeckt wird und die Schweißnähte der verlegten und/oder verschweißten äußeren, oberen Farbpolymerschicht der Mehrschicht-Abdichtbahnen nicht durch im Bitumen enthaltene Öle verfärbt werden. Ein großer Vorteil der erfindungsgemäßen Mehrschicht-Abdichtbahn liegt darin, dass nicht nur die der Umwelt ausgesetzte Oberfläche der verlegten und/oder verschweißten äußeren, oberen Farbpolymerschicht der Mehrschicht-Abdichtbahnen keine oberflächlichen öligen Stellen aufweist, d.h. Farbbeeinträchtigung, sondern auch die Schweißnähte der verschweißten Abdichtbahnen vorzugsweise keine Farbveränderungen oder öligen Stellen aufweisen. Erfindungsgemäß bevorzugt ist, dass die verschweißte Mehrschicht-Abdichtbahn an der der Umwelt ausgesetzten äußeren Oberfläche Schweißnähte aufweist, die bitumenfrei sind.

In bevorzugten Ausführungsformen der erfindungsgemäßen Mehrschicht-Abdichtbahnen weist die Abdichtbahn an wenigstens einem, vorzugsweise zwei, weiterhin bevorzugt drei, äußeren Randbereich(en) eine Perforierung auf. Die Perforierung der erfindungsgemäßen Mehrschicht-Abdichtbahn ist vorzugsweise in ihrem Randbereich, bevorzugt in ihrem äußeren Randbereich, ausgebildet. Die Mehrschicht-Abdichtbahn kann an wenigstens einer Seite im äußeren Randbereich eine Perforierung aufweisen. Die Mehrschicht-Abdichtbahn kann insbesondere an wenigstens zwei Seiten, vorzugsweise zwei gegenüberliegenden Seiten, oder wenigstens drei Seiten oder in ihrem gesamten Randbereich eine Perforation aufweisen. Vorzugsweise kann die Mehrschicht-Abdichtbahn in dem gesamten die Abdichtbahn umlaufenden Randbereich eine Perforation aufweisen.

Es ist erfindungsgemäß bevorzugt, dass die Schichten die oberhalb und/oder unterhalb der Bitumenschicht angeordnet sind, eine Perforierung aufweisen. Die Perforation ist vorzugsweise durchgehend ausgebildet. Die Perforation ist vorzugsweise durch die Schichten durchgehend ausgebildet, die oberhalb und/oder unterhalb der Bitumenschicht angeordnet sind. Die Perforation ist vorzugsweise derart ausgebildet, dass Bitumen durch die Perforation an die Oberfläche, vorzugsweise die äußere Oberfläche, der Mehrschicht-Abdichtbahn gelangen kann.

Vorzugsweise sind die äußeren, oberhalb der Bitumenschicht angeordneten, Schichten der Mehrschicht-Abdichtbahn perforiert. Es ist bevorzugt, dass alle oberhalb der Bitumenschicht angeordneten Schichten an wenigstens einem äußeren Randbereich eine Perforation aufweisen. Die Perforation kann sich jedoch auch auf einzelne Schichten beschränken. Beispielsweise können eine oder mehrere erfindungsgemäß vorgesehene Farbpolymerschicht(en), Sperrschicht(en), Flammschutzschicht(en), Trägerschicht(en) und/oder Haftvermittlerschicht(en) eine Perforation aufweisen. Beispielsweise kann wenigstens die Farbpolymerschicht und/oder Sperrschicht, vorzugsweise die äußere Farbpolymerschicht und/oder Sperrschicht, an wenigstens einer Seite im äußeren Randbereich eine Perforierung aufweisen, die Farbpolymerschicht und/oder Sperrschicht kann aber auch an wenigstens zwei Seiten, vorzugsweise zwei gegenüberliegenden Seiten, oder wenigstens drei Seiten oder in ihrem gesamten die Abdichtbahn umlaufenden Randbereich, eine Perforierung aufweisen. Es kann erfindungsgemäß auch vorgesehen sein, dass die Bitumenschicht(en) und/oder Schutzschicht(en) eine Perforation in wenigstens einem Randbereich aufweisen.

Diese Ausführungsform führt erfindungsgemäß dazu, dass Bitumen durch die Perforation an die Oberfläche der Mehrschicht-Abdichtbahn dringen und mit Bitumen einer benachbarten, vorzugsweise darüber liegenden, Mehrschicht-Abdichtbahn in Kontakt treten kann. Dies kann erfindungsgemäß dazu führen, dass ein verbesserter Verbund mit einer darüber liegenden Abdichtbahn ausgebildet wird. Die Perforation ermöglicht auch eine verbesserte Verschweißbarkeit und eine erhöhte Dichtigkeit der verschweißten Mehrschicht-Abdichtbahnen.

Der perforierte Randbereich weist vorzugsweise eine Breite im Bereich von 1 cm bis 15 cm, bevorzugt im Bereich von 2 cm bis 10 cm, ganz besonders bevorzugt im Bereich von 5 cm auf.

In einer ganz besonders bevorzugten Ausführungsform der erfindungsgemäßen Mehrschicht-Abdichtbahn überragt die äußere, obere Farbpolymerschicht und die nichtmetallische Sperrschicht die darunter angeordnete(n) Schicht(en), insbesondere die Bitumenschicht an wenigstens einem Randbereich, wenigstens teilweise, vorzugsweise vollständig, während wenigstens ein weiterer Randbereich, vorzugsweise der gegenüberliegende Randbereich, eine Perforation aufweist. Eine solche Abdichtbahn führt beim Verlegen und/oder Verschweißen dazu, dass die Vorteile eines verbesserten Verbundes durch das durch die Perforation tretende Bitumen in vorteilhafter Weise damit verbunden wird, dass das hervortretende Bitumen durch die überragende Sperrschicht abgedeckt wird und die Schweißnähte der verlegten und/oder verschweißten äußeren, oberen Farbpolymerschicht der Mehrschicht-Abdichtbahnen nicht durch im Bitumen enthaltene Öle verfärbt wird.

In bevorzugten Ausführungsformen der Mehrschicht-Abdichtbahn, kann diese eine Perforation einer Farbpolymerschicht, einer nichtmetallischen Sperrschicht und der verbindenden Haftvermittlerschichten oberhalb einer Bitumenschicht an wenigstens einem Randbereich der Mehrschicht-Abdichtbahn aufweisen, wobei die Farbpolymerschicht und die nichtmetallische Sperrschicht die Bitumenschicht wenigstens an einem anderen Randbereich, vorzugsweise dem gegenüberliegen Randbereich, der Mehrschicht-Abdichtbahn überragen

Eine solche Ausführungsform der Mehrschicht-Abdichtbahn kann eine bevorzugte Anordnung von zwei Mehrschicht-Abdichtbahnen dieser bevorzugten Ausführungsform ergeben, wobei die Mehrschicht-Abdichtbahnen derart verschweißbar übereinander angeordnet sind, dass Bitumen durch die Perforation an die Oberfläche einer unteren Mehrschicht-Abdichtbahn dringen und einen verbesserten Verbund mit einer darüber liegenden Mehrschicht-Abdichtbahn ausbilden kann, wobei das durch die Perforation tretende Bitumen in vorteilhafter Weise durch die überragende Sperrschicht abgedeckt wird und die Schweißnähte der verlegten und/oder verschweißten äußeren, oberen Farbpolymerschicht der Mehrschicht-Abdichtbahnen nicht durch im Bitumen enthaltene Öle verfärbt wird.

Die farbige verschweißbare Mehrschicht-Abdichtbahn weist durch die Anordnung der miteinander verbunden Schichten Schichtenstrukturen auf. Die möglichen Schichtenabfolgen sind variierbar, so dass zahlreiche Schichtenstrukturen ausgebildet werden können. Im folgenden werden beispielhaft einige Schichtenstrukturen der Mehrschicht-Abdichtbahn erläutert.

In einer bevorzugten Ausführungsform der erfindungsgemäßen farbigen verschweißbare Mehrschicht-Abdichtbahn weist die Abdichtbahn folgende Schichtenstruktur auf:
- wenigstens eine Farbpolymerschicht;
- wenigstens eine nichtmetallische Sperrschicht;
- wenigstens eine Bitumenschicht;
- wobei wenigstens eine Haftvermittlerschicht zwischen der Farbpolymerschicht und der nichtmetallischen Sperrschicht angeordnet ist;
- und wobei wenigstens eine Haftvermittlerschicht zwischen der nichtmetallischen Sperrschicht und der Bitumenschicht angeordnet ist.

In einer weiteren bevorzugten Ausführungsform der erfindungsgemäßen farbigen verschweißbaren Mehrschicht-Abdichtbahn weist die Abdichtbahn folgende Schichtenstruktur auf:
- wenigstens eine obere, äußere Farbpolymerschicht;
- wenigstens eine Flammschutzschicht;
- wenigstens eine nichtmetallischen Sperrschicht;
- wenigstens eine Bitumenschicht;
- wenigstens eine Schutzschicht; worin
- wenigstens eine Haftvermittlerschicht zwischen der oberen, äußeren Farbpolymerschicht und der Flammschutzschicht angeordnet ist; und/oder
- wenigstens eine Haftvermittlerschicht zwischen der Flammschutzschicht und der nichtmetallischen Sperrschicht angeordnet ist; und/oder
- optional wenigstens eine Haftvermittlerschicht zwischen der nichtmetallischen Sperrschicht und der Bitumenschicht angeordnet ist; und/oder
- optional wenigstens eine Haftvermittlerschicht zwischen der Bitumenschicht und der Schutzschicht angeordnet ist.

Weitere erfindungsgemäß denkbare Schichtenstrukturen können neben einer Bitumenschicht beispielsweise zwei Farbpolymerschichten und/oder zwei Sperrschichten umfassen, welche jeweils miteinander verbunden sein können oder bevorzugt alternierend angeordnet sind, und mit der Bitumenschicht zu einer Schichtenstruktur verbunden sein können. Eine solche Anordnung umfassend wenigstens eine Farbpolymerschicht und eine nichtmetallische Sperrschicht, wird auch als eine Mehrschicht-Farb-Kaschieranordnung bezeichnet. Vorteilhafter Weise liegt zwischen einer oberflächlichen Farbpolymerschicht und einer Bitumenschicht eine Sperrschicht, damit eine mögliche Migration von Ölen der Bitumenschicht nicht die Farbpolymerschicht erreicht.

Die farbige verschweißbare Mehrschicht-Abdichtbahn kann wenigstens eine Mehrschicht-Farb-Kaschieranordnung umfassen, oder auch zwei Mehrschicht-Farb-Kaschieranordnungen aufweisen, wobei die Bitumenschicht beidseitig mit wenigstens einer Mehrschicht-Farb-Kaschieranordnung kaschiert ist oder beide Mehrschicht-Farb-Kaschieranordnungen miteinander verbunden sind und einseitig auf die Bitumenschicht kaschiert werden können. Ebenso sind weitere Wiederholungen der Kaschierfolienanordnung denkbar. Unter dem Begriff "Kaschieren" wird das Verkleben unterschiedlicher Materialien verstanden.

Bei einem bevorzugten Verfahren zur Herstellung der erfindungsgemäßen farbigen verschweißbaren Mehrschicht-Abdichtbahn wird wenigstens eine Farbpolymerschicht mit wenigstens einer nichtmetallischen Sperrschicht verbunden, wobei das Ausbilden einer haftenden Verbindung der vorgenannten Schichten bevorzugt durch Verkleben, besonders bevorzugt durch Verkleben mittels eines Haftvermittlers erfolgt. Das Verbinden der Schichten kann auch durch weitere übliche und geeignete Verfahren erfolgen, beispielsweise durch Coextrudieren, Laminieren oder Verpressen.

Ein bevorzugtes Verfahren zur Herstellung einer farbigen verschweißbaren Mehrschicht-Abdichtbahn umfasst die Schritte:
a. Vorlegen einer Farbpolymerschicht;
b. Vorlegen einer nichtmetallischen Sperrschicht;
c. Ausbilden einer haftenden Verbindung zwischen der Farbpolymerschicht und der nichtmetallischen Sperrschicht;
d. Vorlegen einer Bitumenschicht;
e. Ausbilden einer haftenden Verbindung zwischen der mehrschichtigen Anordnung aus a bis c und der Bitumenschicht.

Es ist erfindungsgemäß vorgesehen, zur Herstellung einer farbigen verschweißbaren Mehrschicht-Abdichtbahn bei oder nach Herstellung der Bitumenbahn eine mehrschichtige Anordnung umfassend eine gewünschte Schichtenabfolge, beispielsweise eine Anordnung aus a bis c, mit Ausnahme der Bitumenbahn, auf diese haftend aufzubringen. Das Ausbilden einer haftenden Verbindung zwischen der mehrschichtigen Anordnung und der Bitumenschicht kann bevorzugt mittels Aufkaschieren, Coextrusion, Laminatverfahren oder anderen üblichen Verfahren erfolgen.

Ein Vorteil des erfindungsgemäßen Verfahrens zur Herstellung einer farbigen verschweißbaren Mehrschicht-Abdichtbahn wird dadurch erzielt, dass das Verfahren in bevorzugten Ausführungsformen ein zweistufiges Verfahren ist. In einem ersten Schritt erfolgt ein Ausbilden einer haftenden Verbindung zwischen der Farbpolymerschicht und der nichtmetallischen Sperrschicht, vorzugsweise durch Coextrusionsverfahren. Ein Vorteil der zur Ausbildung einer haftenden Verbindung zwischen der Farbpolymerschicht und der nichtmetallischen Sperrschicht verwendbaren Haftvermittler liegt darin, dass vorzugsweise Schmelzkleber verwendbar sind, die zwischen der Farbpolymerschicht und der Sperrschicht während der Coextrusion aufgebracht werden können. Der Vorteil liegt darin, dass das Vorlegen der Farbpolymerschicht sowie der nichtmetallischen Sperrschicht und das Ausbilden der Verbindung in einem Verfahrensschritt erfolgen kann, beispielsweise durch Coextrusion. Ein weiterer Vorteil liegt darin, dass dünne Schichten des Haftvermittlers, beispielsweise im Bereich von ≥ 10 µm bis ≤ 20 µm, ausgebildet werden können, wodurch sich beispielsweise Trocknungsschritte erübrigen. Ein Vermeiden von Trocknungsschritten bedeutet beispielsweise einen großen Verfahrensvorteil gegenüber Naßverfahren der Beschichtung.

In einem zweiten Verfahrensschritt kann eine haftende Verbindung der Anordnung umfassend beispielsweise eine mittels Haftvermittler verbundene Farbpolymerschicht und eine nichtmetallische Sperrschicht mit einer Bitumenschicht ausgebildet werden. Vorzugsweise erfolgt das Ausbilden der Verbindung zwischen der Bitumenschicht und der mehrschichtigen Anordnung mittels Laminierungsverfahren, besonders bevorzugt mittels Heißlaminierung. Unter "Heißlaminierung" wird im Sinne dieser Erfindung das Ausbilden einer Verbindung zwischen einer mehrschichtigen Anordnung und einer heißen Bitumenschicht verstanden. Die Bitumenschicht weist bei der Ausbildung der Verbindung vorzugsweise Temperaturen im Bereich von ≥ 60°C bis ≤ 200°C, bevorzugt im Bereich von ≥ 80°C bis ≤ 140°C, auf. Ein bedeutender Vorteil ergibt sich daraus, dass die Laminierung bei der Herstellung der Bitumenschicht erfolgen kann, wodurch die Herstellung der Mehrschicht-Abdichtbahn in einem zweischrittigen Verfahren ermöglicht wird. Vorteilhafter Weise ist durch das Verbinden der nichtmetallischen Schichten mit heißem Bitumen eine deutlich verbesserte Verbindung der Materialien erzielbar.

In weiterhin bevorzugten Ausfürungsformen des Verfahrens kann das Ausbilden der Verbindung zwischen der Bitumenschicht und der mehrschichtigen Anordnung auch mittels Haftvermittlerschichten erfolgen. Besonders bevorzugt ist die Haftvermittlerschicht zwischen der nichtmetallischen Sperrschicht und der Bitumenschicht bei der Herstellung der Bitumenschicht aufbringbar. Auch in diesem Fall wird die Herstellung der Mehrschicht-Abdichtbahn in einem zweischrittigen Verfahren ermöglicht. Gegebenenfalls umfasst das Herstellen einer Bitumenschicht auch das Einbringen von Trägermaterialien und/oder das Aufbringen einer Trägerschicht.

In bevorzugten Ausführungsformen dieses Verfahrens ist die Bitumenschicht bei der Ausbildung der Verbindung warm und weist besonders bevorzugt Temperaturen im Bereich von ≥ 60°C bis ≤ 200°C, bevorzugt im Bereich von ≥ 80°C bis ≤ 140°C, auf. Weiterhin bevorzugt sind auch verwendbare Haftvermittler bei der Ausbildung der Verbindung erwärmt und/oder warm, vorzugsweise sind Schmelzkleber verwendbar. In besonders bevorzugten Ausführungsformen des Verfahrens ist die Anordnung umfassend Farbpolymerschicht und nichtmetallische Sperrschicht ebenfalls erwärmt, vorzugsweise durch Wärmevorbehandlung mittels IR-Strahlung. Das Ausbilden der Verbindung unter Verwendung warmer Schichten ermöglicht nicht nur eine besonders gut haftende Verbindung sondern auch eine zügige Verarbeitung bei der Herstellung.

Die Schutzschicht ist bevorzugt mit der äußeren Oberfläche der Bitumenschicht, vorzugsweise der der übrigen Schichtenanordnung abgewandten Oberfläche, verbunden und kann beim Verlegen der erfindungsgemäßen Mehrschicht-Abdichtbahn mit geeigneten Mittel entfernt oder verschweißt werden. Die Schutzschicht ist vorzugsweise mit der Bitumenschicht verbunden, wobei die Schutzschicht die Oberfläche der Bitumenschicht vorzugsweise vollständig abdeckt. Optional kann eine Schutzschicht vor, während oder nach dem Ausbilden des Verbundes zwischen der mehrschichtigen Anordnung und der Bitumenschicht auf die äußere Oberfläche der Bitumenschicht aufgebracht werden.

Das erfindungsgemäße Verfahren kann weiterhin das Aufbringen einer Flammschutzschicht umfassen. Ferner kann das erfindungsgemäße Verfahren weiterhin das Aufbringen einer Schutzschicht umfassen. Die Flammschutzschicht wird bevorzugt mit der Farbpolymerschicht haftend verbunden, so dass ein Schutz vor Flugfeuer für alle darunter liegenden Schichten gewährleistet werden kann. Die Flammschutzschicht kann mit der Farbpolymerschicht verbunden werden, oder mit der Bitumenschicht, wobei auch vorgesehen sein kann, dass weder die Farbpolymerschicht noch die Bitumenschicht mit der Flammschutzschicht verbunden sein kann. Bevorzugt umfasst die Farbpolymerschicht Flammschutzmittel.

Besonders bevorzugt kann die Farbpolymerschicht Flammschutzmittel umfassen und/oder als Flammschutzschicht ausgebildet sein.

Die erfindungsgemäßen farbigen verschweißbaren Mehrschicht-Abdichtbahnen lassen sich insbesondere zur Abdichtung exponierter Flächen, beispielsweise als Dach- oder Dichtungsbahn, verwenden. Ferner lassen sich die Mehrschicht-Abdichtbahn vorzugsweise zur Abdichtung gegen Wasser, beispielsweise Niederschläge oder Grundwasser, verwenden, weiterhin bevorzugt als Abdichtbahn im Hoch- und Tiefbau verwenden.

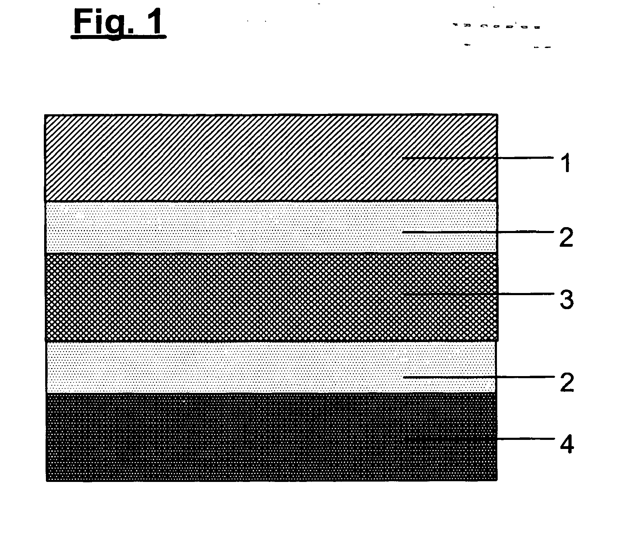

Der Gegenstand der vorliegenden Patentanmeldung wird anhand der Figuren 1 bis 14 näher erläutert, wobei bei den Figuren 1 bis 12 die einzelnen Schichten der Mehrschicht-Abdichtbahn durch die angegebenen Bezugsziffern charakterisiert werden. In den folgenden Figuren 1 bis 12 sind Haftvermittlerschichten abgebildet, wobei erfindungsgemäß auch vorgesehen ist, dass die Mehrschicht-Abdichtbahn auch ohne Haftvermittlerschicht(en) ausgebildet werden kann.

In den Figuren zeigt:
- Fig. 1: eine Schichtanordnung einer ersten Ausführungsform einer Mehrschicht-Abdichtbahn, wobei eine erste Haftvermittlerschicht 2 zwischen einer Farbpolymerschicht 1 und einer nichtmetallischen Sperrschicht 3 angeordnet ist und eine zweite Haftvermittlerschicht 2 zwischen der nichtmetallischen Sperrschicht 3 und einer Bitumenschicht 4 angeordnet ist;

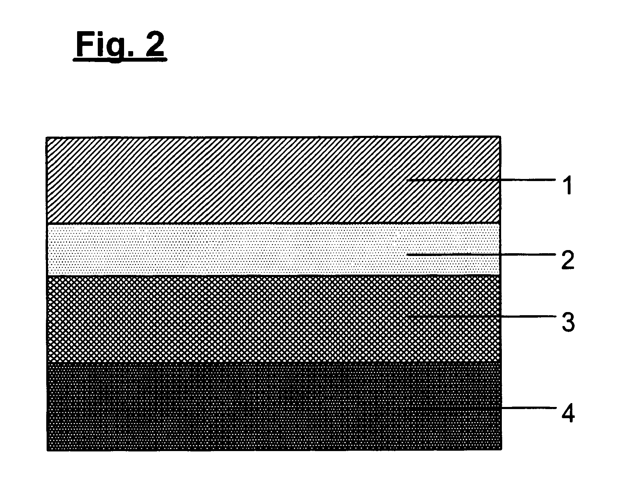

- Fig. 2: eine Schichtanordnung einer zweiten Ausführungsform einer Mehrschicht-Abdichtbahn, wobei eine erste Haftvermittlerschicht 2 zwischen einer Farbpolymerschicht 1 und einer nichtmetallischen Sperrschicht 3 angeordnet ist und diese mit einer Bitumenschicht 4 verbunden ist;

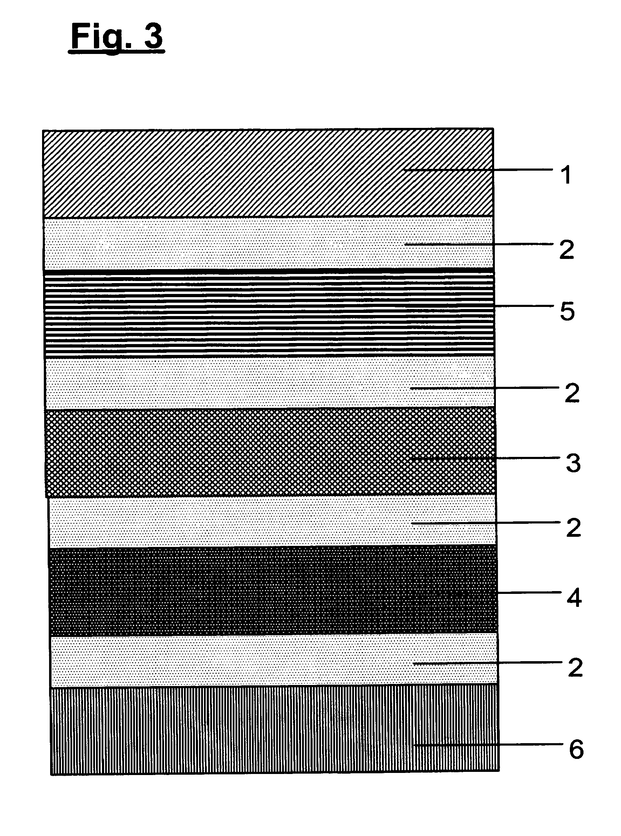

- Fig. 3: eine Schichtanordnung einer dritten Ausführungsform einer Mehrschicht-Abdichtbahn, wobei eine erste Haftvermittlerschicht 2 zwischen einer Farbpolymerschicht 1 und einer Flammschutzschicht 5 angeordnet ist, eine zweite Haftvermittlerschicht 2 zwischen der Flammschutzschicht 5 und einer nichtmetallischen Sperrschicht 3 angeordnet ist, eine dritte Haftvermittlerschicht 2 zwischen der nichtmetallischen Sperrschicht 3 und einer Bitumenschicht 4 angeordnet ist und eine vierte Haftvermittlerschicht 2 zwischen der Bitumenschicht 4 und einer Schutzschicht 6 angeordnet ist;

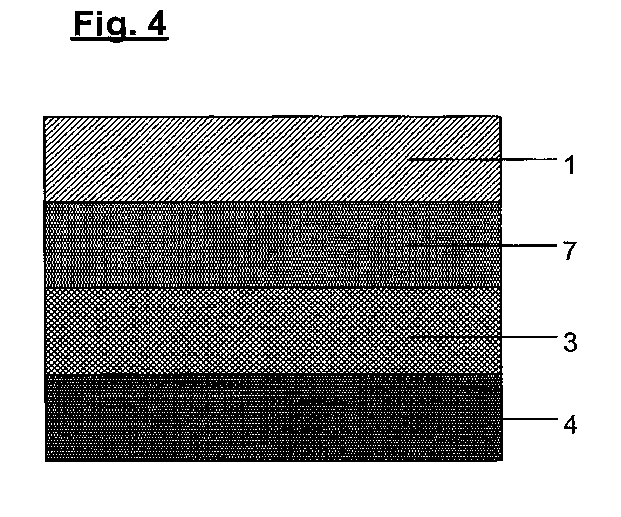

- Fig. 4: eine Schichtanordnung einer vierten Ausführungsform einer Mehrschicht-Abdichtbahn, wobei eine Farbpolymerschicht 1 auf einer Trägerschicht 7 angeordnet ist, wobei die Trägerschicht 7 auf einer nichtmetallischen Sperrschicht 3 angeordnet ist und die nichtmetallische Sperrschicht 3 auf einer Bitumenschicht 4 angeordnet ist;

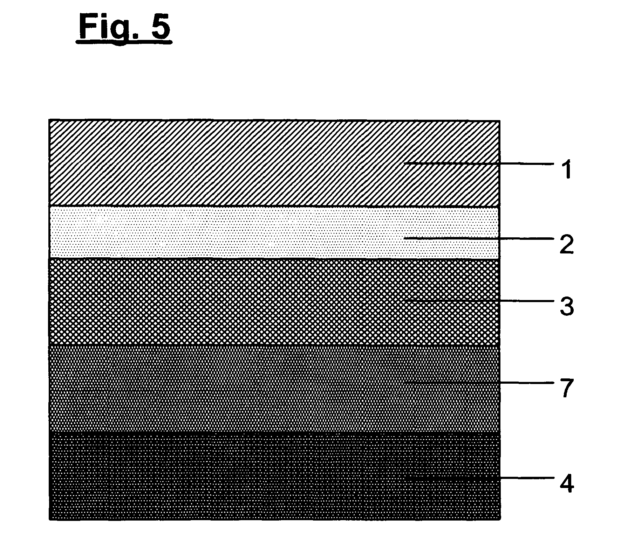

- Fig. 5: eine Schichtanordnung einer fünften Ausführungsform einer Mehrschicht-Abdichtbahn, wobei eine erste Haftvermittlerschicht 2 zwischen einer Farbpolymerschicht 1 und einer nichtmetallischen Sperrschicht 3 angeordnet ist und eine Trägerschicht 7 zwischen der nichtmetallischen Sperrschicht 3 und einer Bitumenschicht 4 angeordnet ist;

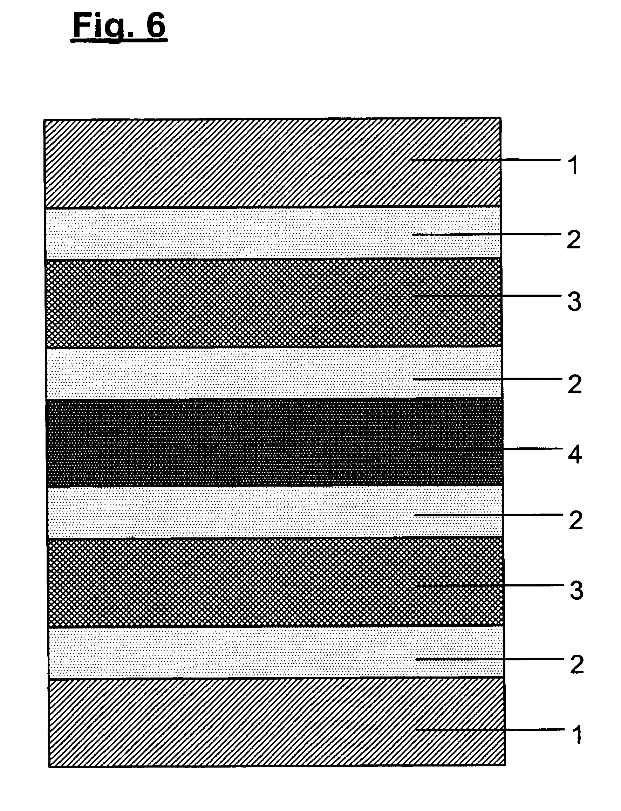

- Fig. 6: eine Schichtanordnung einer sechsten Ausführungsform einer Mehrschicht-Abdichtbahn, wobei eine erste Haftvermittlerschicht 2 zwischen einer ersten oberen Farbpolymerschicht 1 und einer oberen nichtmetallischen Sperrschicht 3 angeordnet ist, eine zweite Haftvermittlerschicht 2 zwischen der oberen nichtmetallischen Sperrschicht 3 und einer Bitumenschicht 4 angeordnet ist, eine dritte Haftvermittlerschicht 2 zwischen der Bitumenschicht 4 und einer zweiten, unteren nichtmetallischen Sperrschicht 3 angeordnet ist und eine vierte Haftvermittlerschicht 2 zwischen der zweiten, unteren nichtmetallischen Sperrschicht 3 und einer zweiten, unteren Farbpolymerschicht 1 angeordnet ist;

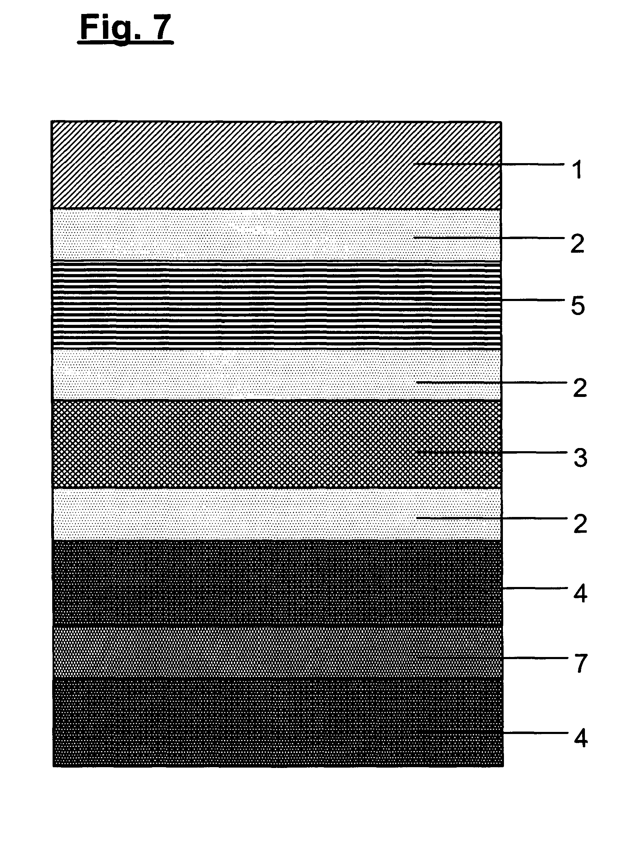

- Fig. 7: eine Schichtanordnung einer siebten Ausführungsform einer Mehrschicht-Abdichtbahn, wobei eine erste Haftvermittlerschicht 2 zwischen einer Farbpolymerschicht 1 und einer Flammschutzschicht 5 angeordnet ist, eine zweite Haftvermittlerschicht 2 zwischen der Flammschutzschicht 5 und einer nichtmetallischen Sperrschicht 3 angeordnet ist, eine dritte Haftvermittlerschicht 2 zwischen der nichtmetallischen Sperrschicht 3 und einer Bitumenschicht 4 angeordnet ist und wobei eine Trägerschicht 7 in der Bitumenschicht 4 sandwichartig angeordnet ist;

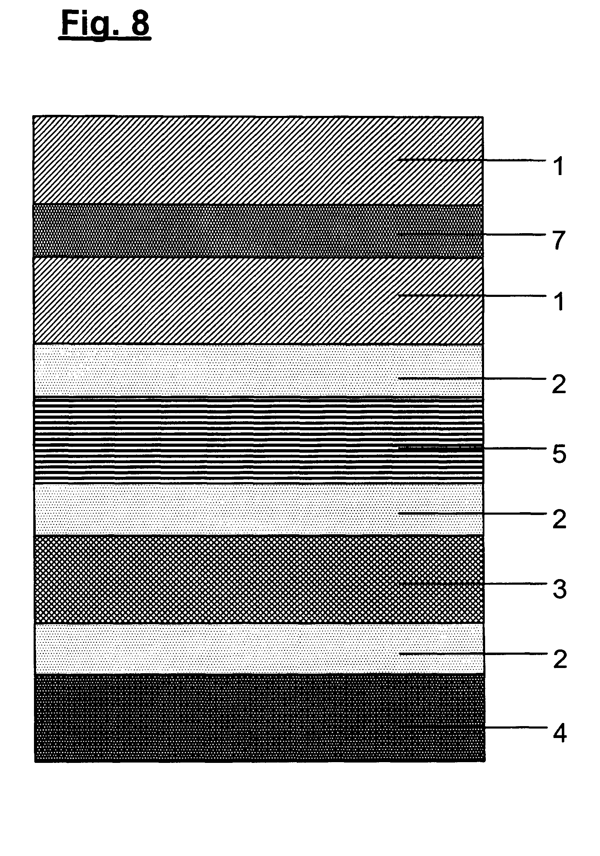

- Fig. 8: eine Schichtanordnung einer achten Ausführungsform einer Mehrschicht-Abdichtbahn, wobei eine erste Haftvermittlerschicht 2 zwischen einer Farbpolymerschicht 1, wobei eine Trägerschicht 7 in der Farbpolymerschicht 1 sandwichartig angeordnet ist, und einer Flammschutzschicht 5 angeordnet ist, eine zweite Haftvermittlerschicht 2 zwischen der Flammschutzschicht 5 und einer nichtmetallischen Sperrschicht 3 angeordnet ist, eine dritte Haftvermittlerschicht 2 zwischen der nichtmetallischen Sperrschicht 3 und einer Bitumenschicht 4 angeordnet ist;

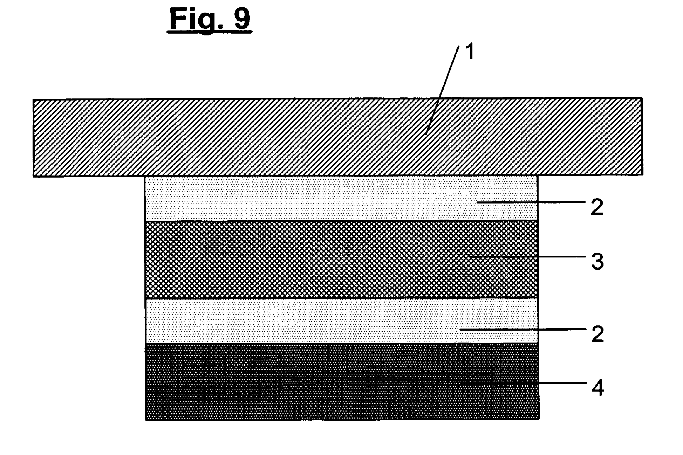

- Fig. 9: eine Schichtanordnung einer neunten Ausführungsform einer Mehrschicht-Abdichtbahn, wobei eine erste Haftvermittlerschicht 2 zwischen einer Farbpolymerschicht 1 und einer nichtmetallischen Sperrschicht 3 angeordnet ist und eine zweite Haftvermittlerschicht 2 zwischen der nichtmetallischen Sperrschicht 3 und einer Bitumenschicht 4 angeordnet ist und wobei die Farbpolymerschicht 1 den Rand der Bitumenschicht 4, der nichtmetallischen Sperrschicht 3 und der Haftvermittlerschichten 2 überragt;

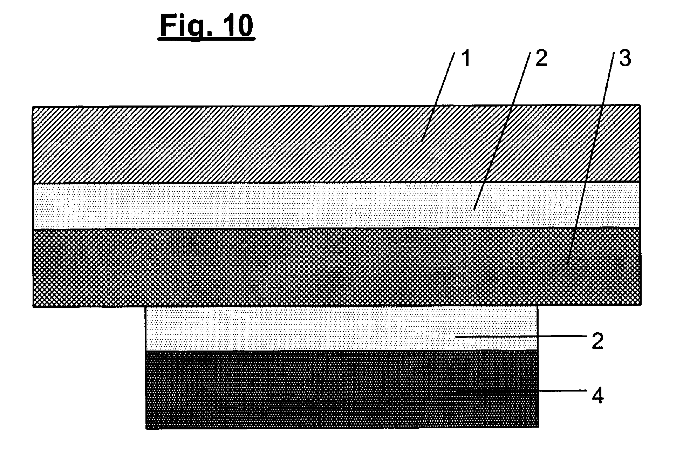

- Fig. 10: eine Schichtanordnung einer zehnten Ausführungsform einer Mehrschicht-Abdichtbahn, wobei eine erste Haftvermittlerschicht 2 zwischen einer Farbpolymerschicht 1 und einer nichtmetallischen Sperrschicht 3 angeordnet ist und eine zweite Haftvermittlerschicht 2 zwischen der nichtmetallischen Sperrschicht 3 und einer Bitumenschicht 4 angeordnet ist und wobei die Farbpolymerschicht 1, die erste Haftvermittlerschicht 2 und die nichtmetallische Sperrschicht 3 den Rand der Bitumenschicht 4 und der zweiten Haftvermittlerschicht 2 überragen;

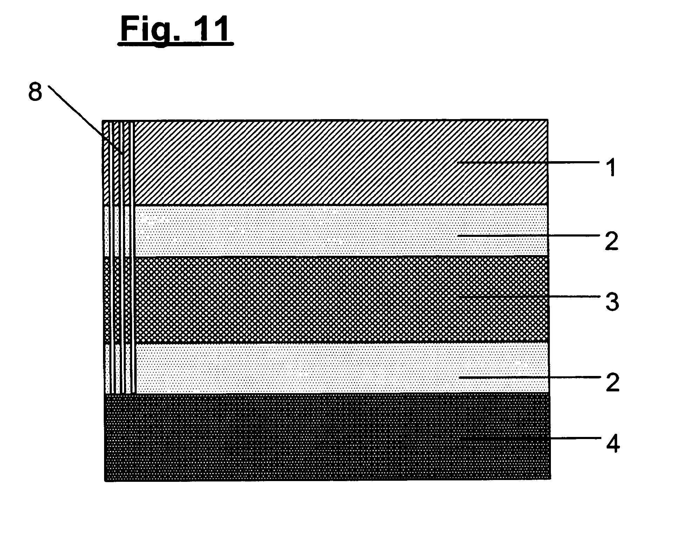

- Fig. 11: eine Schichtanordnung einer elften Ausführungsform einer Mehrschicht-Abdichtbahn, wobei eine erste Haftvermittlerschicht 2 zwischen einer Farbpolymerschicht 1 und einer nichtmetallischen Sperrschicht 3 angeordnet ist und eine zweite Haftvermittlerschicht 2 zwischen der nichtmetallischen Sperrschicht 3 und einer Bitumenschicht 4 angeordnet ist, und wobei eine Perforation 8 in einem Randbereich der Farbpolymerschicht 1, der nichtmetallischen Sperrschicht 3 und der ersten und zweiten Haftvermittlerschicht 2 vorgesehen ist;

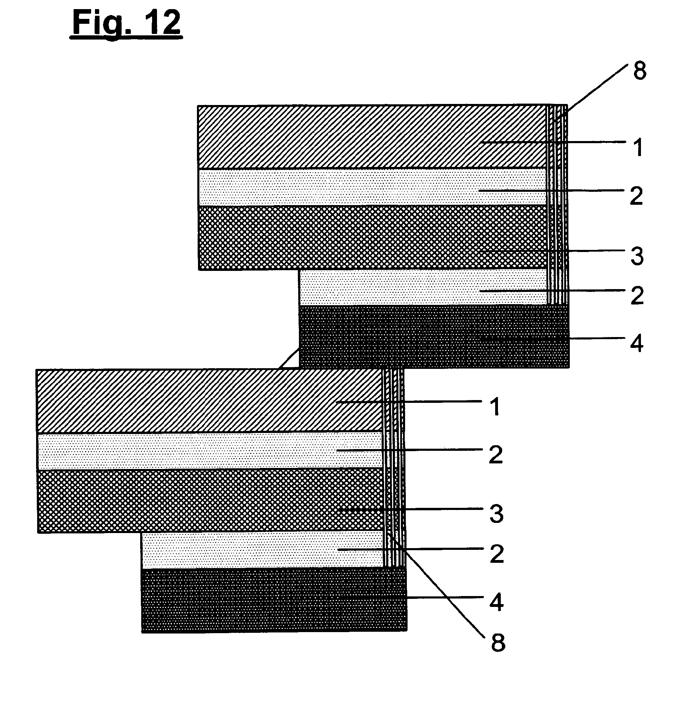

- Fig. 12: eine Anordnung von zwei Mehrschicht-Abdichtbahnen, wobei die Schichtanordnung jeweils vorsieht, dass eine erste Haftvermittlerschicht 2 zwischen einer Farbpolymerschicht 1 und einer nichtmetallischen Sperrschicht 3 angeordnet ist und eine zweite Haftvermittlerschicht 2 zwischen der nichtmetallischen Sperrschicht 3 und einer Bitumenschicht 4 angeordnet ist und wobei in einem Randbereich der Mehrschicht-Abdichtbahn die Farbpolymerschicht 1, die erste Haftvermittlerschicht 2 und die nichtmetallische Sperrschicht 3 den Rand der Bitumenschicht 4 und der zweiten Haftvermittlerschicht 2 überragen und wobei in einem zweiten Randbereich der Mehrschicht-Abdichtbahn eine Perforation 8 in einem Randbereich der Farbpolymerschicht 1, der nichtmetallischen Sperrschicht 3 und der ersten und zweiten Haftvermittlerschicht 2 vorgesehen ist, und die Mehrschicht-Abdichtbahnen verschweißbar übereinander angeordnet sind.

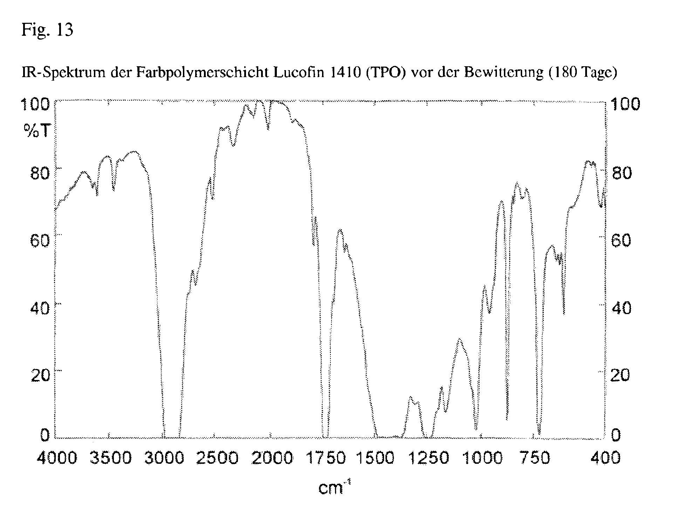

- Fig. 13: ein IR-Spektrum der Polymerschicht LUCOFIN® 1410 vor künstlicher Bewitterung einer Mehrschicht-Abdichtbahn für 180 Tage, nähere Angaben sind in Beispiel 1 ausgeführt;

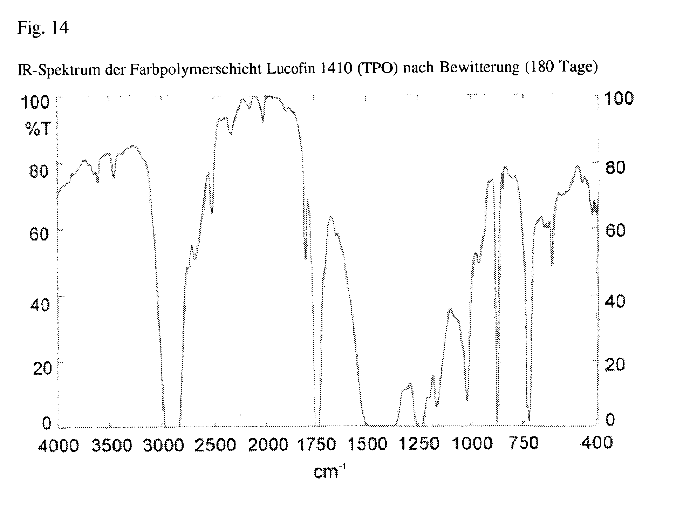

- Fig. 14: ein IR-Spektrum der Polymerschicht LUCOFIN® 1410 nach künstlicher Bewitterung einer Mehrschicht-Abdichtbahn für 180 Tage, nähere Angaben sind in Beispiel 1 ausgeführt.

Der Gegenstand der vorliegenden Erfindung wird anhand des nachfolgenden Beispiels näher erläutert, ohne dass das folgende Ausführungsbeispiel die Erfindung auf dieses einschränkt.

### Beispiel 1

Ein Prüfkörper mit einer Länge von 150 mm und einer Breite von 50 mm einer Mehrschicht-Abdichtbahn umfassend eine oberflächliche Polymerschicht LUCOFIN® 1410, erhältlich bei der Lucobit AG, wurde für 180 Tage gemäß DIN 53387 in einem QUV-Bewitterungsgerät bewittert. Das IR-Spektrum der Polymerschicht LUCOFIN® 1410 wies nach der künstlichen Bewitterung, siehe Fig. 14, verglichen mit dem IR-Spektrum aufgenommen vor der künstlichen Bewitterung, siehe Fig. 13, keine merklichen Abweichungen auf. Dies zeigt die hervorragende Stabilität gegenüber Witterungseinflüssen der erfindungsgemäßen Mehrschicht-Abdichtbahn.

### Bezugszeichenliste

- 1: Farbpolymerschicht
- 2: Haftvermittlerschicht
- 3: nichtmetallische Sperrschicht
- 4: Bitumenschicht
- 5: Flammschutzschicht
- 6: Schutzschicht
- 7: Trägerschicht
- 8: Perforation

## Patentansprüche

1. Farbige, verschweißbare Mehrschicht-Abdichtbahn,
**dadurch gekennzeichnet, dass** die farbige verschweißbare Mehrschicht-Abdichtbahn folgende Schichten umfasst:
- wenigstens eine farb- und witterungsbeständige, verschweißbare Farbpolymerschicht;
- wenigstens eine nichtmetallische Sperrschicht;
- wenigstens eine Bitumenschicht,
- gegebenenfalls wenigstens eine Flammschutzschicht,
- gegebenenfalls wenigstens eine Schutzschicht,
- gegebenenfalls wenigstens eine Haftvermittlerschicht,
- gegebenenfalls wenigstens eine Trägerschicht, worin
die Schichten so angeordnet sind, dass die Mehrschicht-Abdichtbahn als oberste Lage wenigstens eine farb- und witterungsbeständige, verschweißbare Farbpolymerschicht aufweist, und die nichtmetallische Sperrschicht zwischen dieser Polymerschicht und der Bitumenschicht angeordnet ist, wobei die farbige verschweißbare Mehrsehieht-Abdichtbahn ein E-Modul im Bereich von ≥ 20 MPa bis ≤ 200 MPa aufweist.

2. Farbige, verschweißbare Mehrschicht-Abdichtbahn nach Anspruch 1,
**dadurch gekennzeichnet, dass** die Farbpolymerschicht eine Schichtdicke im Bereich von ≥ 50 µm bis ≤ 2000 µm, bevorzugt im Bereich von ≥ 70 µm bis ≤ 1700 µm, weiterhin bevorzugt im Bereich von ≥ 100 µm bis ≤ 1400 µm, besonders bevorzugt im Bereich von ≥ 150 µm bis ≤ 1000 µm aufweist.

3. Farbige, verschweißbare Mehrschicht-Abdichtbahn nach Anspruch 1 oder 2,
**dadurch gekennzeichnet, dass** die Farbpolymerschicht eine Dichte im Bereich von ≥ 0,880 g/cm³ bis ≤ 1,500 g/cm³, bevorzugt im Bereich von ≥ 0,900 g/cm³ bis ≤ 0,950 g/cm³, weiterhin bevorzugt im Bereich von ≥ 0,910 g/cm³ bis ≤ 0,940 g/cm³, und besonders bevorzugt im Bereich von ≥ 0,920 g/cm³ bis ≤ 0,930 g/cm³ aufweist.

4. Farbige, verschweißbare Mehrschicht-Abdichtbahn nach einem der vorhergehenden Ansprüche,
**dadurch gekennzeichnet, dass** die farbige verschweißbare Mehrschicht-Abdichtbahn ein E-Modul im Bereich von ≥ 70 MPa bis ≤ 100 MPa aufweist.

5. Farbige, verschweißbare Mehrschicht-Abdichtbahn nach einem der vorhergehenden Ansprüche,
**dadurch gekennzeichnet, dass** die verschweißte Mehrschicht-Abdichtbahn wenigstens eine Woche, bevorzugt wenigstens einem Monat und besonders bevorzugt wenigstens ein Jahr, bei einer Temperatur von -20°C bis 80 °C keine durch Bitumen verursachte Farbveränderung der Umwelt ausgesetzten äußeren Oberfläche der Farbpolymerschicht aufweist.

6. Farbige, verschweißbare Mehrschicht-Abdichtbahn nach einem der vorhergehenden Ansprüche,
**dadurch gekennzeichnet, dass** die Mehrschicht-Abdichtbahn nach einem Monat, vorzugsweise 6 Monaten, besonders bevorzugt einem Jahr, weiter bevorzugt zwei bis drei Jahren künstlicher Bewitterung keine oder nur sehr geringe Veränderungen der oberflächlichen Farbpolymerschicht aufweist.

7. Farbige, verschweißbare Mehrschicht-Abdichtbahn nach einem der vorhergehenden Ansprüche,
**dadurch gekennzeichnet, dass** die Farbpolymerschicht Flammschutzmittel, Weichmacher, bevorzugt polymere Weichmacher, und/oder Verstärkungsmaterial aufweist.

8. Farbige, verschweißbare Mehrschicht-Abdichtbahn nach einem der vorhergehenden Ansprüche,
**dadurch gekennzeichnet, dass** die Farbpolymerschicht UV-Stabilisatoren aufweist, wobei die UV-Stabilisatoren vorzugsweise ausgewählt sind aus der Gruppe umfassend HALS und/oder UV-Absorber.

9. Farbige, verschweißbare Mehrschicht-Abdichtbahn nach einem der vorhergehenden Ansprüche,
**dadurch gekennzeichnet, dass** die Farbpolymerschicht UV-Stabilisatoren im Bereich von ≥ 0 Gew.-% bis ≤ 2 Gew.-%, bevorzugt im Bereich von ≥ 0,05 Gew.-% bis ≤ 1 Gew.-%, besonders bevorzugt im Bereich von ≥ 0,1 Gew.-% bis ≤ 0,6 Gew.-%, ganz besonders bevorzugt im Bereich von ≥ 0,2 Gew.-% bis ≤ 0,4 Gew.-%, bezogen auf das Gesamtgewicht der Farbpolymerschicht aufweist.

10. Farbige, verschweißbare Mehrschicht-Abdichtbahn nach einem der vorhergehenden Ansprüche,
**dadurch gekennzeichnet, dass** die Farbpolymerschicht HALS im Bereich von ≥ 0,05 Gew.-% bis ≤ 1 Gew.-%, bevorzugt im Bereich von ≥ 0,1 Gew.-% bis ≤ 0,5 Gew.-%, besonders bevorzugt im Bereich von ≥ 0,2 Gew.-% bis ≤ 0,4 Gew.-%, bezogen auf das Gesamtgewicht der Farbpolymerschicht aufweist.

11. Farbige, verschweißbare Mehrschicht-Abdichtbahn nach einem der vorhergehenden Ansprüche,
**dadurch gekennzeichnet, dass** die Farbpolymerschicht aus einem Material ausgebildet ist, ausgewählt aus der Gruppe umfassend Polyvinylchloride (PVC), Derivate von Polyvinylchloridverbindungen, chloriertes Polyethylen (CPE), Ethylenpolypropylendienmonomer, Derivate von Ethylenpolypropylendienmonomer-Verbindungen, thermoplastische Legierungen flexibler Polyolefine (FPO), thermoplastische Polyolefinlegierungen (TPO), Ethylencopolymerisate wie Ethylen-Vinylacetat-Copolymer (EVA), Ethylen-Butylacrylat-Copolymer (EBA), Ethylen-Acrylsäure-Copolymer (EAA), Ethylen-Methylacrylat-Copolymer (EMA), Polyethylencopolymeren, Polyethylen niederer Dichte (low density polyethylene, LDPE), lineares Polyethylen niederer Dichte (linear low density polyethylene, LLDPE), Polyethylen sehr niederer Dichte (very low density polyethylene, VLDPE), Metallocen-katalysiertes lineares Polyethylen niederer Dichte (metallocene-based linear low density polyethylene, m-LLDPE), Metallocen-katalysiertes Polyethylen sehr niederer Dichte (metallocene-based very low density polyethylene, m-VLDPE), Ethylenvinylalkohol, Polypropylene, Polypropylen-Copolymere, amorphes Poly-alpha-Olefin (APAO) und/oder Mischungen davon

12. Farbige, verschweißbare Mehrschicht-Abdichtbahn nach einem der vorhergehenden Ansprüche,
**dadurch gekennzeichnet, dass** die nichtmetallische Sperrschicht eine polymere Schicht ist, wobei die nichtmetallische Sperrschicht vorzugsweise aus einem Material ausgebildet ist, ausgewählt aus der Gruppe umfassend Polyamid, Ethylenvinylalkohol, Polyester und/oder Mischungen davon.

13. Farbige, verschweißbare Mehrschicht-Abdichtbahn nach einem der vorhergehenden Ansprüche,
**dadurch gekennzeichnet, dass** wenigstens eine Haftvermittlerschicht zwischen der Farbpolymerschicht und der nichtmetallischen Sperrschicht und/oder wenigstens eine Haftvermittlerschicht zwischen der nichtmetallischen Sperrschicht und der Bitumenschicht angeordnet ist.

14. Farbige, verschweißbare Mehrschicht-Abdichtbahn nach einem der vorhergehenden Ansprüche,
**dadurch gekennzeichnet, dass** die farbige verschweißbare Mehrschicht-Abdichtbahn eine Trägerschicht aus einem gewebten und/oder nicht gewebten Material umfasst, wobei das Material vorzugsweise ein nicht metallisches Material ist.

15. Farbige, verschweißbare Mehrschicht-Abdichtbahn nach einem der vorhergehenden Ansprüche,
**dadurch gekennzeichnet, dass** wenigstens eine Farbpolymerschicht, vorzugsweise die äußere obere Polymerschicht, den äußeren Rand der Bitumenschicht wenigstens teilweise, vorzugsweise vollständig, überragt.

16. Farbige, verschweißbare Mehrschicht-Abdichtbahn nach einem der vorhergehenden Ansprüche,
**dadurch gekennzeichnet, dass** die Mehrschicht-Abdichtbahn an wenigstens einem äußeren Randbereich eine Perforierung aufweist.

17. Farbige, verschweißbare Mehrschicht-Abdichtbahn nach einem der vorhergehenden Ansprüche,
**dadurch gekennzeichnet, dass** die Mehrschicht-Abdichtbahn eine Schichtenstruktur aufweist mit:
- wenigstens einer oberen, äußeren Farbpolymerschicht;
- wenigstens einer Flammschutzschicht;
- wenigstens einer nichtmetallischen Sperrschicht;
- wenigstens einer Bitumenschicht;
- wenigstens einer Schutzschicht; worin
- wenigstens eine Haftvermittlerschicht zwischen der oberen, äußeren Farbpolymerschicht und der Flammschutzschicht angeordnet ist; und/oder
- wenigstens eine Haftvermittlerschicht zwischen der Flammschutzschicht und der nichtmetallischen Sperrschicht angeordnet ist; und/oder
- optional wenigstens eine Haftvennittlerschicht zwischen der nichtmetallischen Sperrschicht und der Bitumenschicht angeordnet ist; und/oder
- optional wenigstens eine Haftvermittlerschicht zwischen der Bitumenschicht und der Schutzschicht angeordnet ist.

18. Farbige, verschweißte Mehrschicht-Abdichtbahnen nach einem der vorhergehenden Ansprüche,
**dadurch gekennzeichnet, dass** die Mehrschicht-Abdichtbahnen nach dem Verschweißen miteinander auf der äußeren, oberen, der Umwelt ausgesetzten Oberfläche bitumenfrei sind.

19. Verfahren zur Herstellung einer farbigen, verschweißbaren Mehrschicht-Abdichtbahn nach einem der vorhergehenden Ansprüche,
**dadurch gekennzeichnet, dass** das Verfahren die Schritte umfasst:
a. Vorlegen einer Farbpolymerschicht;
b. Vorlegen einer nichtmetallischen Sperrschicht;
c. Ausbilden einer haftenden Verbindung zwischen der Farbpolymerschicht und der nichtmetallischen Sperrschicht;
d. Vorlegen einer Bitumenschicht;
e. Ausbilden einer haftenden Verbindung zwischen der mehrschichtigen Anordnung aus a bis c und der Bitumenschicht.

20. Verfahren zur Herstellung einer farbigen, verschweißbaren Mehrschicht-Abdichtbahn nach Anspruch 19,
**dadurch gekennzeichnet, dass** das Ausbilden der Verbindung zwischen der Bitumenschicht und der mehrschichtigen Anordnung mittels Laminierungsverfahren, bevorzugt mittels Heißlaminierung erfolgt.

21. Verwendung einer farbigen, verschweißbaren Mehrschicht-Abdichtbahn nach einem der vorhergehenden Ansprüche zur Abdichtung von der Umwelt ausgesetzten Flächen, beispielsweise als Dach- oder Dichtungsbahn.

## Claims

1. Coloured weldable multi-layered sealing sheet,
**characterised in that** the coloured weldable multi-layered sealing sheet comprises the following layers:
- at least one colour- and weatherproof weldable coloured polymer layer;
- at least one non-metallic barrier layer;
- at least one bitumen layer,
- optionally at least one flame retardant layer,
- optionally at least one protective layer,
- optionally at least one adhesive layer,
- optionally at least one support layer, wherein
the layers are arranged such that the multi-layered sealing sheet comprises at least one colour- and weatherproof weldable coloured polymer layer as uppermost layer, and the non-metallic barrier layer is arranged between this polymer layer and the bitumen layer, wherein the coloured weldable multi-layered sealing sheet has an E-modulus in the range of ≥ 20 MPa to ≤ 200 MPa.

2. Coloured weldable multi-layered sealing sheet according to claim 1,
**characterised in that** the coloured polymer layer has a thickness in the range of ≥ 50 µm to ≤ 2000 µm, preferably in the range of ≥ 70 µm to ≤ 1700 µm, furthermore preferably in the range of ≥ 100 µm to ≤ 1400 µm, especially preferably in the range of ≥ 150 µm to ≤ 1000 µm.

3. Coloured weldable multi-layered sealing sheet according to claim 1 or 2,
**characterised in that** the coloured polymer layer has a density in the range of ≥ 0.880 g/cm³ to ≤ 1.500 g/cm³, preferably in the range of ≥ 0.900 g/cm³ to ≤ 0.950 g/cm³, furthermore preferably in the range of ≥ 0.910 g/cm³ to ≤ 0.940 g/cm³, und especially preferably in the range of ≥ 0.920 g/cm³ to ≤ 0.930 g/cm³.

4. Coloured weldable multi-layered sealing sheet according to any one of the preceding claims,
**characterised in that** the coloured weldable multi-layered sealing sheet has an E-modulus in the range of ≥ 70 MPa to ≤ 100 MPa.

5. Coloured weldable multi-layered sealing sheet according to any one of the preceding claims,
**characterised in that** the welded multi-layered sealing sheet shows for at least one week, preferably at least one month, and especially preferably at least one year, at a temperature of -20°C to 80 °C no change of colour caused by bitumen of the outer surface of the coloured polymer layer which is exposed to the environment.

6. Coloured weldable multi-layered sealing sheet according to any one of the preceding claims,
**characterised in that** the multi-layered sealing sheet shows no or only very minor changes of the surface coloured polymer layer after one month, preferably six months, especially preferably one year, further preferably two to three years of artificial weathering.

7. Coloured weldable multi-layered sealing sheet according to any one of the preceding claims,
**characterised in that** the coloured polymer layer comprises flame retardants, plasticisers, preferably polymeric plasticisers, and/or reinforcing material.

8. Coloured weldable multi-layered sealing sheet according to any one of the preceding claims,
**characterised in that** the coloured polymer layer comprises UV stabilisers, wherein the UV stabilisers preferably are selected from the group comprising HALS and/or UV absorbers.

9. Coloured weldable multi-layered sealing sheet according to any one of the preceding claims,
**characterised in that** the coloured polymer layer comprises UV stabilisers in the range of ≥ 0 % per weight to ≤ 2 % per weight, preferably in the range of ≥ 0.05 % per weight to ≤ 1 % per weight, especially preferably in the range of ≥ 0.1 % per weight to ≤ 0.6 % per weight, more especially preferably in the range of ≥ 0.2 % per weight to ≤ 0.4 % per weight, referred to the total weight of the coloured polymer layer.

10. Coloured weldable multi-layered sealing sheet according to any one of the preceding claims,
**characterised in that** the coloured polymer layer comprises HALS in the range of ≥ 0.05 % per weight to ≤ 1 % per weight, preferably in the range of ≥ 0.1 % per weight to ≤ 0.5 % per weight, especially preferably in the range of ≥ 0.2 % per weight to ≤ 0.4 % per weight, referred to the total weight of the coloured polymer layer.

11. Coloured weldable multi-layered sealing sheet according to any one of the preceding claims,
**characterised in that** the coloured polymer layer is formed from a material selected from the group comprising polyvinyl chloride (PVC), derivatives of polyvinyl chloride compounds, chlorinated polyethylene (CPE), ethylene polypropylene diene monomer, derivatives of ethylene polypropylene diene monomer compounds, thermoplastic alloys of flexible polyolefines (FPO), thermoplastic polyolefine alloys (TPO), copolymerisates of ethylene as ethylene vinyl acetate copolymer (EVA), ethylen butyl acrylate copolymer (EBA), ethylene acrylic acid copolymer (EAA), ethylene methyl acrylate copolymer (EMA), polyethylene copolymers, low density polyethylene (LDPE), linear low density polyethylene (LLDPE), very low density polyethylene (VLDPE), metallocene-based linear low density polyethylene (m-LLDPE), metallocene-based very low density polyethylene (m-VLDPE), ethylene vinyl alcohol, polypropylene, polypropylene copolymers, amorphous polyalphaolefin (APAO) and/or mixtures thereof.

12. Coloured weldable multi-layered sealing sheet according to any one of the preceding claims,
**characterised in that** the non-metallic barrier layer is a polymeric layer, wherein the non-metallic barrier layer preferably is formed from a material selected from the group comprising polyamide, ethylene vinyl alcohol, polyester and/or mixtures thereof.

13. Coloured weldable multi-layered sealing sheet according to any one of the preceding claims,
**characterised in that** at least one adhesive layer is arranged between the coloured polymer layer and the non-metallic barrier layer and/or at least one adhesive layer is arranged between the non-metallic barrier layer and the bitumen layer.

14. Coloured weldable multi-layered sealing sheet according to any one of the preceding claims,
**characterised in that** the coloured weldable multi-layered sealing sheet comprises a support layer made from a woven and/or non woven material, wherein the material preferably is a non-metallic material.

15. Coloured weldable multi-layered sealing sheet according to any one of the preceding claims,
**characterised in that** at least one coloured polymer layer, preferably the outer upper polymer layer, protrudes the outer border of the bitumen layer at least partially, preferably completely.

16. Coloured weldable multi-layered sealing sheet according to any one of the preceding claims,
**characterised in that** the multi-layered sealing sheet comprises a perforation in at least one edge region.

17. Coloured weldable multi-layered sealing sheet according to any one of the preceding claims,
**characterised in that** the multi-layered sealing sheet comprises a layer structure having:
- at least one outer upper coloured polymer layer;
- at least one flame retardant layer;
- at least one non-metallic barrier layer;
- at least one bitumen layer;
- at least one protective layer; wherein
- at least one adhesive layer is arranged between the outer upper coloured polymer layer and the flame retardant layer; and/or
- at least one adhesive layer is arranged between the flame retardant layer and the non-metallic barrier layer; and/or
- optionally at least one adhesive layer is arranged between the non-metallic barrier layer and the bitumen layer; and/or
- optionally at least one adhesive layer is arranged between the bitumen layer and the protective layer.

18. Coloured welded multi-layered sealing sheets according to any one of the preceding claims,
**characterised in that** the multi-layered sealing sheets after the welding are free of bitumen on their outer upper surfaced which is exposed to the environment.

19. Process for the manufacture of a coloured weldable multi-layered sealing sheet according to any one of the preceding claims,
**characterised in that** the process comprises the steps of:
a. providing a coloured polymer layer;
b. providing a non-metallic barrier layer;
c. forming of an adherent bonding between the coloured polymer layer and the non-metallic barrier layer;
d. providing a bitumen layer;
e. forming of an adherent bonding between the multi-layer arrangement of a to c and the bitumen layer.

20. Process for the manufacture of a coloured weldable multi-layered sealing sheet according to claim 19,
**characterised in that** the forming of the bonding between the bitumen layer and the multi-layer arrangement is carried out by use of a lamination processes, preferably by use of hot laminating.

21. Use of a coloured weldable multi-layered sealing sheet according to any one of the preceding claims for sealing of surfaces which are exposed to the environment, for example as roofing sheet or water proofing sheet.

## Revendications

1. Bande d'étanchéité multicouche, colorée et soudable, **caractérisée en ce que** la bande d'étanchéité multicouche, colorée et soudable comprend les couches suivantes :
- au moins une couche polymère colorée, soudable et résistante à la décoloration et aux intempéries ;
- au moins une couche d'arrêt non métallique ;
- au moins une couche bitumée ;
- le cas échéant au moins une couche pare-flammes ;
- le cas échéant au moins une couche protectrice ;
- le cas échéant au moins une couche d'agent adhésif ;
- le cas échéant au moins une couche porteuse ;
les couches étant agencées de telle sorte que la bande d'étanchéité multicouche comporte comme couche supérieure au moins une couche polymère colorée, soudable et résistante à la décoloration et aux intempéries et que la couche d'arrêt non métallique est placée entre cette couche polymère et la couche bitumée, la bande d'étanchéité multicouche, colorée et soudable ayant un coefficient d'élasticité dans une plage allant de ≥ 20 MPa à ≤ 200 MPa.

2. Bande d'étanchéité multicouche, colorée et soudable selon la revendication 1, **caractérisée en ce que** la couche polymère colorée a une épaisseur dans une plage allant de ≥ 50 µm à ≤ 2 000 µm, de préférence dans une plage allant de ≥ 70 µm à ≤ 1 700 µm, encore de préférence dans une plage allant de ≥ 100 µm à ≤ 1 400 µm et particulièrement de préférence dans une plage allant de ≥ 150 µm à ≤ 1 000 µm.

3. Bande d'étanchéité multicouche, colorée et soudable selon la revendication 1 ou 2, **caractérisée en ce que** la couche polymère colorée a une densité dans une plage allant de ≥ 0,880 g/cm³ à ≤ 1,500 g/cm³, de préférence dans une plage allant de ≥ 0,900 g/cm³ à ≤ 0,950 g/cm³, encore de préférence dans une plage allant de ≥ 0,910 g/cm³ à ≤ 0,940 g/cm³ et particulièrement de préférence dans une plage allant de ≥ 0,920 g/cm³ à ≤ 0,930 g/cm³.

4. Bande d'étanchéité multicouche, colorée et soudable selon l'une des revendications précédentes, **caractérisée en ce que** la bande d'étanchéité multicouche, colorée et soudable a un coefficient d'élasticité dans une plage allant de ≥ 70 MPa à ≤ 100 MPa.

5. Bande d'étanchéité multicouche, colorée et soudable selon l'une des revendications précédentes, **caractérisée en ce que** la bande d'étanchéité multicouche, colorée et soudable ne présente pendant au moins une semaine, de préférence au moins un mois et particulièrement de préférence au moins un an, à une température comprise entre -20 °C et 80 °C, aucun changement de couleur, dû au bitume, de la surface extérieure de la couche polymère colorée exposée à l'environnement.

6. Bande d'étanchéité multicouche, colorée et soudable selon l'une des revendications précédentes, **caractérisée en ce que** la bande d'étanchéité multicouche présente après un mois, de préférence 6 mois, particulièrement de préférence un an et encore de préférence deux à trois ans d'exposition forcée aux intempéries, pas ou seulement très peu de modifications de la couche polymère colorée superficielle.

7. Bande d'étanchéité multicouche, colorée et soudable selon l'une des revendications précédentes, **caractérisée en ce que** la couche polymère colorée comporte un agent anti-flammes, un plastifiant, de préférence un plastifiant polymère, et/ou un matériau de renforcement.

8. Bande d'étanchéité multicouche, colorée et soudable selon l'une des revendications précédentes, **caractérisée en ce que** la couche polymère colorée comporte des stabilisateurs UV, les stabilisateurs UV étant choisis de préférence dans le groupe comprenant HALS et/ou absorbeurs UV.

9. Bande d'étanchéité multicouche, colorée et soudable selon l'une des revendications précédentes, **caractérisée en ce que** la couche polymère colorée comporte des stabilisateurs UV dans une plage allant de ≥ 0 % en poids à ≤ 2 % en poids, de préférence dans une plage allant de ≥ 0,05 % en poids à ≤ 1 % en poids, particulièrement de préférence dans une plage allant de ≥ 0,1 % en poids à ≥ 0,6 % en poids et plus particulièrement de préférence dans une plage allant de ≥ 0,2 % en poids à ≤ 0,4 % en poids par rapport au poids total de la couche polymère colorée.

10. Bande d'étanchéité multicouche, colorée et soudable selon l'une des revendications précédentes, **caractérisée en ce que** la couche polymère colorée comporte un stabilisateur de type HALS dans une plage allant de ≥ 0,05 % en poids à ≤ 1 % en poids, de préférence dans une plage allant de ≥ 0,1 % en poids à ≤ 0,5 % en poids et particulièrement de préférence dans une plage allant de ≥ 0,2 % en poids à ≤ 0,4 % en poids par rapport au poids total de la couche polymère colorée.

11. Bande d'étanchéité multicouche, colorée et soudable selon l'une des revendications précédentes, **caractérisée en ce que** la couche polymère colorée est en un matériau choisi dans le groupe comprenant le chlorure de polyvinyle (PVC), des dérivés de composés de chlorure de polyvinyle, le polyéthylène chloré (CPE), l'éthylène propylène diène monomère, des dérivés de composés d'éthylène propylène diène monomère, des alliages thermoplastiques de polyoléfines souples (FPO), des alliages de polyoléfine thermoplastiques (TPO), de copolymérisats d'éthylène tels qu'un copolymère d'éthylène et d'acétate de vinyle (EVA), un copolymère d'éthylène et d'acrylate de butyle (EBA), un copolymère d'éthylène et d'acide acrylique (EAA), un copolymère d'éthylène et d'acrylate de méthyle (EMA), des copolymères de polyéthylène, un polyéthylène de basse densité (low density polyethylene, LDPE), un polyéthylène linéaire de basse densité (linear low density polyethylene, LLDPE), un polyéthylène de très basse densité (very low density polyethylene, VLDPE), un polyéthylène linéaire de basse densité à catalyse métallocène (metallocene-based linear low density polyethylene, m-LLDPE), un polyéthylène de très basse densité à catalyse métallocène (metallocene-based very low density polyethylene, m-VLDPE), un alcool de vinyle éthylène, des polypropylènes, des copolymères de polypropylène, la polyalphaoléfine amorphe (APAO) et/ou des mélanges de ceux-ci.

12. Bande d'étanchéité multicouche, colorée et soudable selon l'une des revendications précédentes, **caractérisée en ce que** la couche d'arrêt non métallique est une couche polymère, la couche d'arrêt non métallique étant de préférence en un matériau choisi dans le groupe comprenant le polyamide, l'alcool de vinyle éthylène, le polyester et/ou des mélanges de ceux-ci.

13. Bande d'étanchéité multicouche, colorée et soudable selon l'une des revendications précédentes, **caractérisée en ce qu'**au moins une couche d'agent adhésif est placée entre la couche polymère colorée et la couche d'arrêt non métallique et/ou **en ce qu'**au moins une couche d'agent adhésif est placée entre la couche d'arrêt non métallique et la couche bitumée.

14. Bande d'étanchéité multicouche, colorée et soudable selon l'une des revendications précédentes, **caractérisée en ce que** la bande d'étanchéité multicouche, colorée et soudable comprend une couche porteuse en un matériau tissé et/ou non tissé, le matériau étant de préférence un matériau non métallique.

15. Bande d'étanchéité multicouche, colorée et soudable selon l'une des revendications précédentes, **caractérisée en ce qu'**au moins une couche polymère colorée, de préférence la couche polymère supérieure externe, dépasse du bord extérieur de la couche bitumée au moins partiellement et de préférence complètement.

16. Bande d'étanchéité multicouche, colorée et soudable selon l'une des revendications précédentes, **caractérisée en ce que** la bande d'étanchéité multicouche comporte une perforation au moins sur une zone marginale extérieure.

17. Bande d'étanchéité multicouche, colorée et soudable selon l'une des revendications précédentes, **caractérisée en ce que** la bande d'étanchéité multicouche comporte une structure en couches avec :
- au moins une couche polymère colorée supérieure externe ;
- au moins une couche pare-flammes ;
- au moins une couche d'arrêt non métallique ;
- au moins une couche bitumée ;
- au moins une couche protectrice ;
- au moins une couche d'agent adhésif étant placée entre la couche polymère colorée supérieure externe et la couche pare-flammes ; et/ou
- au moins une couche d'agent adhésif étant placée entre la couche pare-flammes et la couche d'arrêt non métallique ; et/ou
- en option, au moins une couche d'agent adhésif étant placée entre la couche d'arrêt non métallique et la couche bitumée ; et/ou
- en option, au moins une couche d'agent adhésif étant placée entre la couche bitumée et la couche protectrice.

18. Bandes d'étanchéité multicouches, colorées et soudables selon l'une des revendications précédentes, **caractérisée en ce que** les bandes d'étanchéité multicouches sont sans bitume sur la surface extérieure supérieure exposée à l'environnement après le soudage les unes aux autres.

19. Procédé de fabrication d'une bande d'étanchéité multicouche, colorée et soudable selon l'une des revendications précédentes, **caractérisé en ce que** le procédé comprend les étapes suivantes :
a. pose d'une couche polymère colorée ;
b. pose d'une couche d'arrêt non métallique ;
c. formation d'une liaison adhésive entre la couche polymère colorée et la couche d'arrêt non métallique ;
d. pose d'une couche bitumée ;
e. formation d'une liaison adhésive entre l'ensemble à plusieurs couches issu des étapes a à c et la couche bitumée.

20. Procédé de fabrication d'une bande d'étanchéité multicouche, colorée et soudable selon la revendication 19, **caractérisé en ce que** la formation de la liaison entre la couche bitumée et l'ensemble à plusieurs couches s'effectue au moyen d'un procédé de laminage, de préférence au moyen d'un laminage à chaud.

21. Utilisation d'une bande d'étanchéité multicouche, colorée et soudable selon l'une des revendications précédentes pour étanchéifier des surfaces exposées à l'environnement, par exemple en tant que lé de toiture ou lé d'étanchéité.
